# EUROPEAN PATENT SPECIFICATION

(11) **EP 3 924 092 B1**
(45) Date of publication and mention of the grant of the patent: **08.04.2026**
(21) Application number: 20717347.7
(22) Date of filing: 13.02.2020
(51) Int. Cl.: B28C 5/08, B28C 5/14, B28C 7/04, B28C 9/00, B28C 7/12, B01F 23/53, B01F 23/50, B01F 27/2123, B01F 27/706, B01F 33/82, B01F 33/80, C04B 26/04

(54) **SYSTEM AND METHOD FOR CONTINUOUS MANUFACTURE OF JOINT COMPOUND**
SYSTEM UND VERFAHREN ZUR KONTINUIERLICHEN HERSTELLUNG EINER FUGENMASSE
SYSTÈME ET PROCÉDÉ POUR LA FABRICATION CONTINUE D'UN COMPOSÉ DE JOINT

(30) Priority: 15.02.2019 US 201962806335 P; 06.02.2020 US 202016783856
(43) Date of publication of application: 22.12.2021
(73) Proprietor: UNITED STATES GYPSUM COMPANY, Chicago, IL 60661-3676 (US)
(72) Inventor: BLACKBURN, David R., Barrington, Illinois 60010 (US); CHANDRASEKARAN, Dayakar Thoddu, Lake Bluff, Illinois 60044 (US); FINLEY, Erin, Corona, California 92881 (US); KAINI, Nabin, Fort Worth, Texas 76155 (US); KINCAID, Tyler, Chicago, Illinois 60647 (US); MILLER, Charles J., Johnsburg, Illinois 60051 (US); PARK, Michael, Hanover Park, Illinois 60133 (US)
(74) Representative: BSB Patentanwälte Schütte & Engelen Partnerschaft mbB
(86) International application number: PCT/US2020/018032
(87) International publication number: WO 2020/168028

(56) References cited:
- DE-C- 862 419
- DE-C- 862 419
- DE-C- 862 419
- FR-A- 1 038 999
- FR-A- 1 038 999
- US-A- 4 499 561
- US-A- 4 499 561
- US-A- 5 575 844
- US-A- 5 575 844
- US-A- 5 575 844
- US-A1- 2017 326 510
- US-A1- 2017 326 510
- US-A1- 2017 326 510

## Description

### CROSS-REFERENCE TO RELATED APPLICATION

This patent application claims the benefit of priority to U.S. Patent Application No. 16/783,856, filed February 6, 2020, and U.S. Provisional Patent Application No. 62/806,335, filed February 15, 2019, both of which being entitled, "System and Method for Continuous Manufacture of Joint Compound".

### BACKGROUND

The present disclosure relates in general to the continuous production of compositions and, more particularly, to systems and methods for the continuous manufacture of joint compound used with cementitious building panels.

In the construction of buildings, one of the most common elements is gypsum wallboard, often known as drywall, used in the construction of walls and/or ceilings. Walls made from gypsum wallboard are conventionally constructed by affixing the cementitious panels to wood or metal framing, and treating the joints between adjoining panels with a composition referred to as joint compound. This treating process generally proceeds by placing a taping joint compound within the joint formed by the abutted edges of the wallboards, and embedding a liquid-permeable paper or fiberglass tape within that compound. When dry (or set), a second coating referred to as a topping joint compound is applied over the joint, which may be subsequently lightly sanded upon drying. A third or finish coat is applied, allowed to dry, and lightly sanded to create a smooth monolithic surface that conceals any indication of where the drywall seams were. Another type of joint compound is an all-purpose grade that may be used for both embedding the joint tape and applying the finish coats. The joint compound can be applied to provide a patterned or textured effect to the finished wall and joint through the use of special application tools.

There are several categories of joint compounds. The joint compound can be supplied as a dry powder, to which an amount of water is added at the work site by the worker to give the joint compound a suitable consistency. Other joint compounds, generally referred to as "ready-mix" joint compounds, are pre-mixed with water during manufacturing. These joint compounds are generally sold in a bucket or pail in a form that is suitable for use with little or no addition of water at the job site. The joint compounds, whether dry or ready-mix, come in two general classes (1) drying-type and (2) setting-type. Drying type compounds harden through the evaporation of water, whereas setting type joint compounds chemically react with water during the curing process.

Setting type joint compounds typically use calcium sulfate hemihydrate, also known as stucco or plaster of Paris, as a base. When water is added to the setting type powder, it reacts with the calcium sulfate hemihydrate via a hydration reaction to form an interlocking matrix of calcium sulfate dihydrate crystals. The interlocking crystal matrix gives the compound increased strength. Setting type joint compound typically provides a stronger finished joint, resulting in less shrinking and cracking, over a drying type joint compound. Also, when using setting type joint compound, an applicator need not wait for the joint compound to be completely dry prior to further finishing.

In drying-type joint compounds, the filler comprises substantially calcium carbonate (CaCO₃) or calcium sulfate dihydrate (CaSO₄-2H₂O, also referred to as gypsum). In current construction practices, generally it is preferred to use a ready-mix, pre-wetted, drying-type joint compound which contains either a calcium carbonate or gypsum filler. Prior to use (generally during manufacturing), the filler and a binder (along with several other known ingredients) are mixed with water. After application, when the water dries, i.e., evaporates, a dry, relatively hard cementitious material is left behind. Drying-type joint compounds have the advantage of ease of use, as they typically come in a ready mixed form, with water being added and mixed by the manufacturer.

A third type of joint compound combines the setting action of a calcium sulfate hemihydrate based compound with the ease of use of a ready mixed compound. Ready-mix, setting-type joint compound generally comprises an aqueous slurry of calcium sulfate hemihydrate and a set retarding agent.

The typical manufacturing process for ready mix joint compound is not continuous. Rather, it is typically batch-continuous because the mixing of the constituent ingredients is done in batches, and downstream packaging is done continuously.

In existing systems and processes used to manufacture joint compound, bulk materials are shipped and stored at manufacturing facilities in large quantities. Batch processing is then utilized and generally includes mixing dry, solid ingredients together in an operation such as a hopper or mixer, then combining the dry ingredients with wet, liquid ingredients in another separate mixer. The combined ingredients are then typically mixed to form a homogenous composition which is transferred into any number of holding tanks. This composition is then metered in a continuous manner into desired packaging and/or holding containers for subsequent distribution. At each step of the manufacturing process, ingredients may need time to be sufficiently mixed before proceeding to subsequent steps. In some applications, portions of the compound may be transported temporarily to a holding container prior to continuing the process. Upon producing a batch of compound, subsequent cycles can proceed to produce additional batches of blended material.

In these processes, quantities of bulk materials are fed into hopper systems in batches, which can result in downtime while a new batch is being prepared. Each stage of the mixing process is time-consuming and can result in significant manufacturing downtime and/or delay. In current systems, one approach to overcoming production downtime involves using a number of separate process lines which operate in parallel such that one of the two or more processes is constantly in operation. Utilizing such a system may result in a "quasi-continuous" manufacturing process, but such a process necessitates additional manufacturing equipment and facility size. Further still, individual batches of the compound may have varying compositions (as a result of variations in ingredient properties and/or quantities used to form the compound) and thus may undesirably perform differently when used. These processes usually require an entire batch of the product to be completed prior to testing its properties.

U.S. Patent No. 5, 575,844 is entitled, "Method of Preparing Gypsum Products," and is directed to a method of making gypsum products such as plasterboard from foamed gypsum plaster slurry. The method uses a first mixing chamber containing a high speed rotor and inlets for gypsum plaster and water. The plasterboard from foamed gypsum plaster slurry. The method uses a first mixing chamber containing a high speed rotor and inlets for gypsum plaster and water. The initial dispersion of gypsum plaster and water foamed in the first chamber passes directly and continuously into a second chamber containing a low speed rotor. Preformed foam is introduced into the second chamber through an inlet, and the foamed slurry product leaves the second chamber through an outlet, to be formed into plasterboard.

US 2017/326510 A1 relates to a continuous ready mix joint or texture compound manufacturing system according to the preamble of claim 1 and a method for continuously manufacturing a ready mix joint or texture compound according to the preamble of claim 9. The system includes a continuous mixer having an inlet and an outlet, a pump disposed at the outlet of the continuous mixer, and a disperger having an inlet and an outlet. The continuous mixer is adapted to receive at least one dry ingredient and at least one wet ingredient at the inlet and continuously mix the at least one dry ingredient and the at least one wet ingredient to form a mixed composition. The pump is adapted to pump the mixed composition from the outlet of the continuous mixer to the inlet of the disperger.

There is a continued need in the art to provide additional solutions to enhance the use of cementitious panels. For example, there is a continued need for techniques for the continuous manufacture of joint compound.

It will be appreciated that this background description has been created by the inventors to aid the reader and is not to be taken as an indication that any of the indicated problems were themselves appreciated in the art.

### SUMMARY

The present invention relates to a system for continuously manufacturing a joint compound according to claim 1 and to a method of continuously manufacturing a joint compound according to claim 9. All embodiments described in this application, which do not fall within the scope of the independent claims, are herewith indicated as illustrative embodiments not in accordance with the present invention.

In one aspect, the present disclosure is directed to embodiments of a system for continuously manufacturing a joint compound. The system for continuously manufacturing a joint compound includes a continuous mixer and a homogenizing device.

The continuous mixer has at least one mixer inlet and a mixer outlet. The continuous mixer is adapted to receive joint compound ingredients including at least one dry ingredient and at least one liquid ingredient via said at least one mixer inlet, to continuously mix the joint compound ingredients to form a mixed joint compound composition, and to discharge the mixed joint compound composition from the mixer outlet.

The homogenizing device includes a housing defining a homogenizing chamber a chamber and a rotary mixing element disposed within the homogenizing chamber. The homogenizing device has a homogenizer inlet and a homogenizer outlet both in fluid communication with the homogenizing chamber. The homogenizing device is adapted to receive in the homogenizing chamber via the homogenizer inlet the mixed joint compound composition from the mixer outlet of the continuous mixer, and the rotary mixing element is adapted to impart mixing under shear conditions in the homogenizing chamber by rotating at a speed or 400 rpm or less.

In still another aspect, the present disclosure is directed to embodiments of a method of continuously manufacturing a joint compound. The method of continuously manufacturing a joint compound includes feeding joint compound ingredients comprising at least one dry ingredient and at least one liquid ingredient to a continuous mixing apparatus. The joint compound ingredients are continuously mixed using the continuous mixing apparatus to form a mixed joint compound composition. Multiple volumetric units of the mixed joint compound are homogenized to reduce variation in at least one material property of the mixed joint compound relative to each of said at least one material property of the respective multiple volumetric units before undergoing the homogenizing.

Further and alternative aspects and features of the disclosed principles will be appreciated from the following detailed description and the accompanying drawings. As will be appreciated, the systems and techniques for continuously manufacturing a joint compound, and the joint compounds themselves, that are disclosed herein are capable of being carried out and used in other and different embodiments, and capable of being modified in various respects. Accordingly, it is to be understood that both the foregoing general description and the following detailed description are exemplary and explanatory only and do not restrict the scope of the principles disclosed herein.

### BRIEF DESCRIPTION OF THE DRAWINGS

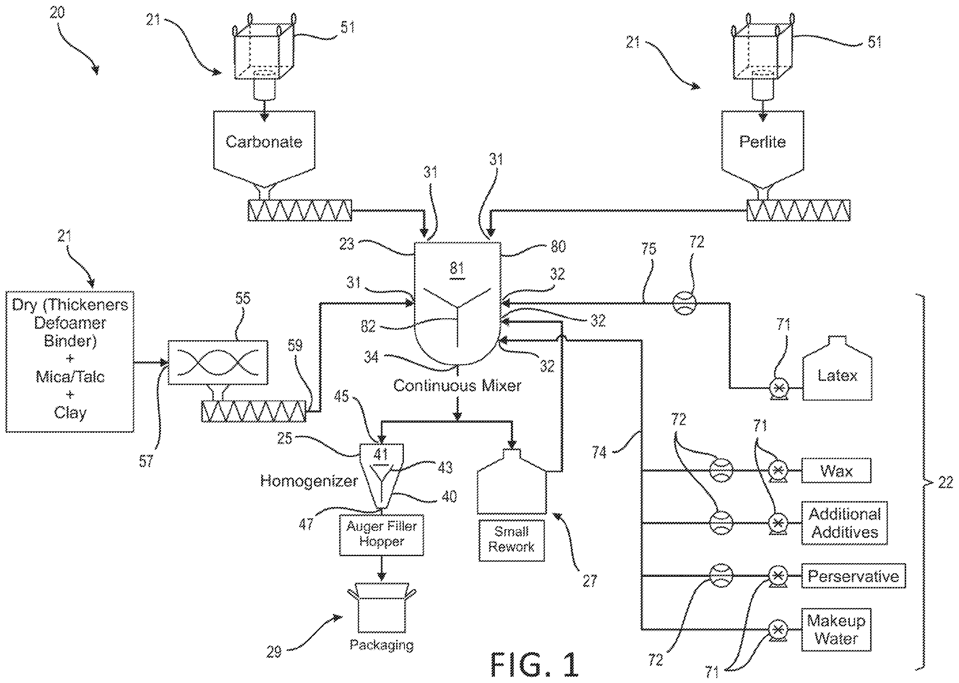

FIG. 1 is a schematic, diagrammatic view of an embodiment of a system for continuously manufacturing a joint compound which is constructed in accordance with principles of the present disclosure, the system including an embodiment of means for continuously mixing wet, liquid and dry, solid joint compound ingredients together and means for homogenizing multiple volumetric units of mixed joint compound to reduce variation in at least one joint compound material property (e.g., viscosity) across multiple successively produced volumetric units of mixed joint compound (relating to standard commercial packaging sizes for joint compound, such as five-gallon (~18.9 liters) pails, for example) relative to the material property of the respective multiple volumetric units before passing through the means for homogenizing.
FIG. 2 is a perspective view of an embodiment of a continuous mixer suitable for use in a system for continuously manufacturing a joint compound which is constructed in accordance with principles of the present disclosure.
FIG. 3 is a side elevational view of an embodiment of a dry ingredient inlet for a continuous mixer suitable for use in a system for continuously manufacturing a joint compound which is constructed in accordance with principles of the present disclosure, illustrating a water sprayer with nozzle inserted therein.
FIG. 4 is a top plan view of the dry ingredient inlet of FIG. 3.
FIG. 5 is a perspective view, with a portion of the housing removed for illustrative purposes, of an embodiment of a continuous mixer suitable for use in a system for continuously manufacturing a joint compound which is constructed in accordance with principles of the present disclosure, illustrating a pair of rotating shafts disposed within an interior of a mixing chamber of the continuous mixer.
FIG. 6 is a fragmentary, perspective view of an embodiment of a continuous mixer suitable for use in a system for continuously manufacturing a joint compound which is constructed in accordance with principles of the present disclosure, illustrating an outlet thereof.
FIG. 7 is an end view of the outlet of FIG. 6, illustrating a perforated plate disposed within a terminal cone portion of the outlet.
FIG. 8 is a perspective view of another embodiment of a continuous mixer suitable for use in a system for continuously manufacturing a joint compound which is constructed in accordance with principles of the present disclosure, the continuous mixer including an agitator in the form of a squirrel-cage rotor.
FIG. 9 is a side elevational view of the continuous mixer of FIG. 8.
FIG. 10 is a partial perspective view of an embodiment of a homogenizing mixing device suitable for use in a system for continuously manufacturing a joint compound which is constructed in accordance with principles of the present disclosure, illustrating a rotary shaft outfitted with a plurality of paddles disposed within a mixing chamber of the mixing device.

It should be understood that the drawings are not necessarily to scale and that the disclosed embodiments are illustrated diagrammatically and in partial views. In certain instances, details which are not necessary for an understanding of this disclosure or which render other details difficult to perceive have been omitted. It should be understood that this disclosure is not limited to the particular embodiments illustrated herein.

### DETAILED DESCRIPTION OF EXEMPLARY EMBODIMENTS

The present disclosure provides various embodiments of a system and a method for continuously manufacturing a joint compound that can be used, for example, in connection with the construction of various building structures using cementitious panels. Embodiments of systems for continuously manufacturing a joint compound following principles of the present disclosure can include means for continuously mixing wet (liquid) and dry (solid) joint compound ingredients together and means for homogenizing multiple volumetric units of mixed joint compound to reduce variation in at least one material property of the homogenized joint compound relative to each of said material properties of the respective multiple volumetric units before passing through the means for homogenizing. In embodiments constructed according to principles of the present disclosure, a system for continuously manufacturing a joint compound includes a continuous mixer and a "homogenizer" or "homogenizing device," which is a mixing device configured to blend together a sufficient quantity of joint compound as to reduce variation in at least one joint compound material property (e.g., viscosity) across multiple successively produced volumetric units of mixed joint compound (relating to standard commercial packaging sizes for joint compound, such as five-gallon (~18.9 liters) pails, for example) relative to each of said at least one joint compound material property of the respective multiple volumetric units before passing through the homogenizer. Embodiments of methods for continuously manufacturing a joint compound following principles of the present disclosure can include a step for continuously mixing wet and dry joint compound ingredients together and a step for homogenizing multiple volumetric units of mixed joint compound to reduce variation in at least one material property of the homogenized joint compound relative to each of said material properties of the respective multiple volumetric units before undergoing the step for homogenizing.

In embodiments, systems and methods for continuous production of ready mix joint compound are provided. Continuous powder feeders, such as loss-in-weight feeders, are configured to convey dry ingredients to a continuous mixer. Continuous liquid metering devices, such as metering pumps with flow meters, are configured to convey wet ingredients to the continuous mixer. The continuous mixer is configured to receive the solid and liquid ingredients within a mixing chamber to mix the wet and dry ingredients together in a continuous fashion, and in contrast to the batch mixers conventionally used for ready mix joint compound production. A continuous "homogenizer" or "homogenizing device" is disposed downstream of the continuous mixer and configured to receive mixed joint compound from the continuous mixer. In embodiments, the homogenizer imparts mixing under relatively low shear conditions in which the rotary mixing element of the homogenizer does not exceed 400 rpm. The final product, ready mix joint compound, is discharged from the homogenizer, and can be packaged by conventional means using equipment known to one skilled in the art. In embodiments, an optional secondary continuous mixer can be provided on the downstream side of the continuous mixer and interposed between the main continuous mixer and the homogenizer.

Embodiments of systems and methods for continuously manufacturing a joint compound can help, relative to conventional batch production, reduce raw material cost while maintaining product quality, reduce microorganism activity/spoilage, increase equipment availability time and lower labor cost based upon the reduction in cleanup time of the equipment of a continuous system constructed according to principles of the present disclosure. In addition, embodiments of systems and methods for continuously manufacturing a joint compound can provide the ability to fine-tune the joint compound formulation on-the-fly and to implement changeovers more quickly with less work-in-process relative to conventional batch production techniques. Embodiments of systems and methods for continuously manufacturing a joint compound following principles of the present disclosure can provide increased product yield by producing joint compound that undergoes less densification during processing.

Turning now to the Figures, an embodiment of a system 20 for continuously manufacturing a joint compound constructed according to principles of the present disclosure is shown in FIG. 1. The illustrated system 20 includes a dry ingredient supply system 21, a wet ingredient supply system 22, a continuous mixer 23, a homogenizing device 25, a rework station 27, and a packaging station 29.

The dry ingredient supply system 21 is configured to selectively feed at least one dry ingredient to at least one dry ingredient inlet 31 of the continuous mixer 23. The wet ingredient supply system 22 is configured to selectively feed at least one liquid ingredient to at least one wet ingredient inlet 32 of the continuous mixer 23. The continuous mixer 23 is configured to mix at least one dry ingredient and at least one liquid ingredient together to form a joint compound. The homogenizing mixing device 25 is configured to blend together a sufficient quantity of joint compound as to reduce variation of values in at least one joint compound material property (e.g., viscosity or density) across multiple successively produced volumetric units of mixed joint compound (relating to standard commercial packaging sizes for joint compound, such as five-gallon (~18.9 liters) pails, for example) relative to the values of each of said material properties of the respective multiple volumetric units before passing through the homogenizing device 25.

The rework station 27 is equipped to process joint compound from the continuous mixer 23 that is identified as being outside of a predetermined range of a production specification (e.g., viscosity or texture). In embodiments, the rework station 27 can comprise any suitable mixing equipment as is known to those skilled in the art. In embodiments, the rework station 27 includes equipment configured to return joint compound to the continuous mixer for further processing. In embodiments, the rework station 27 includes an optional supplemental mixer to help further mix the joint compound received from the main continuous mixer.

The packaging station 29 is configured to package volumetric units of joint compound received from the homogenizing mixing device into respective suitable containers (such as, e.g., a one-gallon (~3.8 liters) or a five-gallon (~18.9 liters) bucket). In embodiments, the packaging station 29 can comprise any suitable packaging equipment as is known to those skilled in the art.

The continuous mixer 23 has at least one mixer inlet 31, 32 and a mixer outlet 34. The continuous mixer 23 is adapted to receive joint compound ingredients including at least one dry ingredient and at least one liquid ingredient via said at least one mixer inlet 31, 32, to continuously mix the joint compound ingredients to form a mixed joint compound composition, and to discharge the mixed joint compound composition from the mixer outlet 34.

In embodiments, the mixed joint compound can be conveyed from the continuous mixer 23 to the homogenizing device 25 using any suitable technique. For example, in embodiments, the mixed joint compound is conveyed to the homogenizing device 25 via the pressure generated by the continuous mixer 23 in producing the mixed joint compound. In other embodiments, a pump is provided to help convey the mixed joint compound from the continuous mixer 23 to the homogenizing device 25.

The homogenizing device 25 includes a housing 40 defining a homogenizing chamber 41 and a rotary mixing element 43 disposed within the homogenizing chamber 41. The homogenizing device 25 has a homogenizer inlet 45 and a homogenizer outlet 47 both in fluid communication with the homogenizing chamber 41. The homogenizing device 25 is adapted to receive in the homogenizing chamber 41 via the homogenizer inlet 45 the mixed joint compound composition from the mixer outlet 34 of the continuous mixer 23, and the rotary mixing element 43 is adapted to impart mixing under shear conditions in the homogenizing chamber 41 by rotating at a speed or 400 rpm or less. In embodiments, the rotary mixing element 43 of the homogenizing device 25 includes a rotatable shaft that is adapted to be operated with a tip speed at its circumference no greater than 2500 feet/minute (~762 meters/minute).

In embodiments, the agitator 43 of the homogenizing device 25 is in the form of a rotatable shaft that is adapted to be operated at 400 rpm or less, 200 rpm or less in other embodiments, and 100 rpm less in yet other embodiments. In embodiments, the agitator 43 of the homogenizing device 25 includes a rotatable shaft that is adapted to be operated with a tip speed at its circumference of 2500 feet/minute (~762 meters/minute) or less, 1250 feet/minute (~381 meters/minute) or less in other embodiments, and 625 feet/minute (~190.5 meters/minute) or less in yet other embodiments.

In embodiments, the homogenizing device 25 is configured to blend together a sufficient quantity of joint compound as to reduce variation of values of a joint compound material property across multiple successively produced volumetric units of mixed joint compound relative to the values of the joint compound material property of the respective multiple volumetric units before passing through the homogenizing device 25. In embodiments, the homogenizing chamber 41 of the homogenizing device 25 has a capacity configured to accommodate at least three volumetric units of mixed joint compound therein (e.g., such as at least 15 gallons (~56.8 liters) in embodiments where the volumetric unit is a five-gallon (~18.9 liters) bucket).

In embodiments, the homogenizing chamber 41 of the homogenizing device 25 has a mixing chamber volume that is at least one tenth of a dispensing volume of a volumetric rate at which homogenized material is adapted to be dispensed from the homogenizer outlet 47 of the homogenizing device 25 per minute. For example, in embodiments, the homogenizing device 25 is configured to dispense joint compound therefrom at a rate of 100 gallons (~379 liters) per minute, and the homogenizing chamber 41 of the homogenizing device 25 has a mixing chamber volume with a capacity of at least ten gallons (~37.9 liters). In other embodiments, the homogenizing device 25 is configured such that the homogenizing chamber 41 of the homogenizing device 25 has a mixing chamber volume with a capacity that is at least one third of a dispensing volume of a volumetric rate at which homogenized material is being dispensed from the homogenizing device 25, and at least one half of a dispensing volume of the volumetric rate in other embodiments.

In embodiments, the homogenizing device 25 is configured to reduce variation in viscosity across multiple successively produced volumetric units of mixed joint compound (relating to standard commercial packaging sizes for joint compound, such as five-gallon (~18.9 liters) buckets, for example) such that the viscosity of the joint compound being dispensed from the outlet 47 of the homogenizing device 25 varies by an amount that is less than the amount of variation of the viscosity of the joint compound being fed to the inlet 45 of the homogenizing device 25 using a standardized sampling technique (e.g., a sample rate of every thirty seconds over at least five minutes of continuous production). In embodiments, the homogenizing device 25 is configured to reduce variation in viscosity across multiple successively produced volumetric units of mixed joint compound (relating to standard commercial packaging sizes for joint compound, such as five-gallon (~18.9 liters) buckets, for example) by an order of magnitude relative to the amount of variation in viscosity of the joint compound being fed to the inlet 45 of the homogenizing device 25 using a standardized sampling technique (e.g., a sample rate of every thirty seconds over at least five minutes of continuous production). In embodiments, the homogenizing device 25 is configured to reduce variation in viscosity across multiple successively produced volumetric units of mixed joint compound (relating to standard commercial packaging sizes for joint compound, such as five-gallon (~18.9 liters) buckets, for example) such that the viscosity of the joint compound being dispensed from the outlet 47 of the homogenizing device 25 varies by an amount of ten percent or less using a standardized sampling technique (e.g., a sample rate of every thirty seconds over at least five minutes of continuous production), by an amount of seven percent or less in other embodiments, by an amount of five person percent or less in still other embodiments, and by an amount of three percent or less in yet other embodiments.

In embodiments, the agitator 43 of the homogenizing device 25 is operated under conditions of shear that are controlled to not substantially reduce the average viscosity of the joint compound being dispensed from the outlet 47 of the homogenizing device 25 relative to the average viscosity of the joint compound being fed to the inlet 45 of the homogenizing device 25. In embodiments, the agitator 43 of the homogenizing device 25 is adapted to be operated under conditions of shear that are controlled such that the average viscosity of the joint compound being dispensed from the outlet 47 of the homogenizing device 25 is at least ninety percent of the average viscosity of the joint compound being fed to the inlet 45 of the homogenizing device 25 using a standardized sampling technique (e.g., a sample rate of every thirty seconds over at least five minutes of continuous production).

In embodiments, the dry and wet ingredient supply systems 21, 22 can be configured to deliver wet and dry ingredients to the continuous mixer 23 in predetermined amounts to produce a joint compound having a formulation within a targeted range (by weight percentage) for each ingredient. In embodiments, any suitable joint compound formulation can be used.

In the illustrated embodiment, the joint compound is made from dry ingredients, including carbonate, perlite, mica, talc, clay, a thickener, and a defoamer, and liquid ingredients, including water, latex, wax, a preservative, and other additional additives known to those skilled in the art. In embodiments, the dry ingredients can include any number of minerals, pigments, starches, thickeners, anti bacterials, dyes, and other suitable materials known to those skilled in the art. Although the term "dry" materials or ingredients is used herein to refer to a certain ingredient, it should be understand that such materials may include absorbed or chemically-combined moisture as will be appreciated by one skilled in the art. In other embodiments, a joint compound can be made from different and/or additional ingredients, as one skilled in the art will appreciate. Examples of suitable joint compounds are shown and described in U.S. Patent No. 5,746,822 and U.S. Patent Application Publication Nos. US2008/0229981, US2008/0305252, US2014/0100309, and US2018/0354852. In embodiments, the joint compound made on a continuous basis using embodiments of a system and method of continuously manufacturing joint compound following principles of the present disclosure comprises a binder (that can comprise a sulfonated starch), water, at least one filler (that can comprise calcium carbonate), a thickener (that can comprise a cellulose compound), a preservative (that can comprise a biocide or a bactericide), and a suspending agent or dispersant (that can comprise a clay compound). Although the term "wet" or "liquid" materials or ingredients is used herein to refer to a certain ingredient, it should be understand that such materials may include solids content, as well, and be generally a pourable or flowable material with a liquid portion.

In embodiments, the dry and wet ingredient supply systems 21, 22 can include any suitable feeding systems configured to feed the respective dry and liquid ingredients to the continuous mixer. For example, in embodiments the supply systems 21, 22 can include separate hoppers and/or holding or storage tanks for respective ingredients that are configured to selectively dispense the ingredients therefrom to the continuous mixer. The feeding systems can be metered to allow for accurate and precise continuous flow of the constituent joint compound ingredients to the continuous mixer.

In embodiments, the dry and wet ingredient supply systems 21, 22 can include any suitable type of controlled feeder as will be appreciated by one skilled in the art. In embodiments, the dry ingredient supply system 21 includes at least one loss-in-weight type feeder, such as, a gravimetric feeder 51 as depicted in FIG. 1 for the carbonate and the perlite. In embodiments, the dry ingredient supply system 21 includes any suitable commercially-available feeder, examples of which include an Acrison "weight-loss" feeder (including a gravimetric feeder) available from Acrison, Inc. of Moonachie, New Jersey and a Schenck AccuRate^{®} loss-in-weight feeder available from Schenck Process c/o Stock Equipment Co. Inc. of Chagrin Falls, Ohio. In embodiments, the loss-in-weight type feeder can be configured to continuously monitor the actual flow of the dry ingredients as they are discharged from the feeder. In embodiments, the dry ingredient supply system 21 includes at least one loss in weight-type feeder with an accuracy of at least ±1 weight percent In other embodiments, the dry ingredient supply system 21 includes at least one volumetric-type feeder with an accuracy of at least ±2.0 weight percent.

In embodiments, at least one inert filler suitable for use in joint compounds may be appropriately used in the present joint compound. Examples of such a filler include, but are not limited to, calcium carbonate and calcium sulfate dihydrate common to preparation of joint compounds as known to those skilled in the art. In embodiments, the joint compound may be a filler-free joint compound.

In embodiments, the carbonate can comprise any suitable carbonate. In embodiments, finely ground calcium carbonate is used. In embodiments, the carbonate comprises a dry powder ingredient that can make up at least about 50% by dry weight of the joint compound and can be within a range of about 50% to 98% of the dry weight.

In embodiments, the carbonate can comprise calcium carbonate in the form of limestone. In embodiments, the limestone can be stored onsite in a silo and serially transferred to a weigh hopper (a holding or storage bin) for dispensing by a gravimetric feeder.

In embodiments, the joint compound formulation can include gypsum (calcium sulfate dihydrate). Additional fillers such as mica, talc, such as sericite, diatomaceous earth, clays, such as attapulgite, sepulite and kaolin, and pyrophylite can also be used as ingredients of the joint compound.

In embodiments of systems and methods following principles of the present disclosure, the joint compound produced can include calcium sulfate hemihydrate (calcined gypsum or stucco). A joint compound that includes calcined gypsum is typically referred to as a setting type joint compound, and preferably includes a set retarder.

In embodiments, perlite is used in the joint compound to affect the density, shrinkage, and crack resistance of the joint compound. Any suitable perlite can be used.

Perlite or expanded perlite may be included in the present joint compound as a filler. Use of expanded perlite in a lightweight joint compound is taught in U.S. Patent No. 4,454,267. Expanded perlite is a lightweight material that contains many cracks and fissures. In embodiments, expanded perlite is treated according to the disclosure of U.S. Patent No. 4,525,388, so that the material does not increase in weight due to water absorbed by capillary action.

In at least some embodiments using expanded perlite, the expanded perlite has a particle size which will pass through a 100 mesh screen. In at least some embodiments using expanded perlite, the expanded perlite is treated to render it water-insensitive or left uncoated. An example of a technique for rendering the expanded perlite water-insensitive is disclosed in U.S. Patent No. 4,525,388. In embodiments, the expanded perlite is treated with a silicone or siloxane compound, but other materials may be used to render it water-insensitive (i.e., water-repellent) as will be appreciated by one skilled in the art. Specially treated expanded perlite suitable for use in a joint compound prepared according to principles of the present disclosure is commercially available from suppliers such as Silbrico Corporation of Hodgkins, Illinois.

In embodiments, the expanded perlite is present in an amount of at least about 1% by dry weight of the total composition to achieve desired lightweight properties. In yet other embodiments, the expanded perlite is present in an amount between about 5% and about 10% by dry weight of the total components.

In embodiments, the joint compound can include a filler comprising hollow resin microspheres having a mean particle size of less than 75 microns as lightweight filler as taught in U.S. Patent No. 6,545,066.

In at least some embodiments following principles of the present disclosure, two or more of the dry ingredients are pre-blended together in a mixing apparatus or blender 55 as shown in FIG. 1. As shown in FIG. 1, the system 20 includes a dry ingredient mixer 55. In embodiments, the dry ingredient mixer 55 has at least one dry ingredient mixer inlet 57 and a dry ingredient mixer outlet 59. In embodiments, the dry ingredient mixer 55 is adapted to receive at least two dry ingredients from the dry ingredient supply system 21 via said at least one dry ingredient mixer inlet 57, to mix said at least two dry ingredients to form a mixed dry ingredient composition, and to discharge the mixed dry ingredient composition from the dry ingredient mixer outlet to said at least one dry ingredient inlet 31 of the continuous mixer 23.

In the illustrated embodiment, a thickener, a defoamer, a binder, mica, talc, and clay are pre-blended together in the dry ingredient 55 in the form of a dry blender before being fed to the continuous mixer 23. In other embodiments, other dry ingredients can be pre-blended together as will be appreciated by one skilled in the art. For example, in embodiments, two or more of the following ingredients can be pre-blended together before being fed to the continuous mixer: carbonate, perlite, clay, mica, thickeners, binders, talc, and gypsum (calcium sulfate dihydrate).

In embodiments, any suitable conventional blender can be used to pre-mix two or more ingredients together before being fed to the continuous mixer, including a suitable ribbon blender. Various blenders are available commercially that can be used as will be appreciated by one skilled in the art.

In embodiments of systems and methods following principles of the present disclosure, the joint compound produced can include a suspending agent or dispersant (also called a non-leveling agent), such as a suitable clay, including but not limited to an attapulgite clay. This ingredient provides non-leveling or anti-sag, slip, water retention, and water demand.

In embodiments, a suitable clay is used in the joint compound as a non-leveling agent and/or a thickening agent which controls the viscosity or rheology of the final product. Clay can also help enhance or create the water holding properties of the joint compound. In general, the amount of the suspending agent, if present, ranges from about 1% to about 10%, preferably 2% to 7% by weight of the total composition prior to adding water. Other clays such as sepiolite, bentonite and montmorillonite may also be used in the joint compound, in addition to or instead of the clay mentioned above.

In other embodiments, non-clay suspending agents such as the types listed in U.S. Patent No. 5,336,318, can be used. Also, a synthetically made hydrous magnesium silicate can be used which creates a highly thixotropic solution when prepared in water, with excellent suspending power, thereby helping to prevent lightweight microspheres (when present) from floating to the top and separating.

In embodiments of systems and methods following principles of the present disclosure, the joint compound produced can include mica. The mica can be in the form of a low bulk density mineral used as a filler or extender. Mica can also be used in the joint compound to help improve crack resistance of the joint compound.

In embodiments of systems and methods following principles of the present disclosure, the joint compound produced can include talc. Talc can be included in the joint compound to enhance application properties and also as a white extender pigment.

In embodiments of systems and methods following principles of the present disclosure, the joint compound produced can include a thickener. A thickener can be used to control the viscosity, affect the rheology, and affect the water holding characteristics of the produced joint compound. A thickener suitable for use in a method of continuously making a joint compound according to principles of the present disclosure includes, but is not limited to, a cellulose thickener, such as ethylhydroxy ethylcellulose, hydroxypropyl methylcellulose, methylhydroxypropyl cellulose, hydroxyethyl cellulose, methylhydroxyethyl cellulose and mixtures thereof. In embodiments, the amount of the cellulose thickener ranges from about 0.1% to about 3%, preferably 0.3 to 1%, by dry weight of the total composition of ingredients of the joint compound, not including the water added. It is contemplated that other thickeners may be used instead of, or in addition to, the cellulose thickener.

In embodiments of systems and methods following principles of the present disclosure, the joint compound produced can include a binder. A binder can be used in the joint compound composition to improve bonding to the substrate such as wallboard. An exemplary binder suitable for use in the joint compound made according to principles of the present disclosure includes polyvinyl alcohol.

In embodiments of systems and methods following principles of the present disclosure, the joint compound produced can include a defoamer. In embodiments, a defoaming agent can be in the joint compound to help reduce the level of entrained air in the joint compound produced during the mixing and homogenizing steps.

In embodiments, the wet ingredient supply system 22 includes a metering pump 71 associated with a supply of a respective liquid ingredient. In embodiments, a controller (not shown) is configured to selectively control the pumps 71 and the feeders 51 of the supply systems so that a predetermined measured amount of selected wet and dry ingredients is delivered to the continuous mixer 23. The wet ingredient supply system 22 can include one or more flow meters 72 to provide a feedback loop to the controller to monitor the amount of the respective liquid ingredients being fed to the continuous mixer 23. In embodiments, each ingredient is metered directly into the continuous mixer 23 via its own dedicated metering pump 71, flow meter 72, and communication connection to the controller.

Metering of the liquid ingredients can be accomplished with commercially-available progressive cavity-type pumps (such as, those commercially available from Moyno, Inc. of Springfield, Ohio, for example), where each pump 71 is equipped with a suitable flow meter 72 (such as, a magnetic or Coriolis flow meter, for example) and the system of pumps 71 are controlled by a programmable logic controller. In embodiments, the pumps 71 of the wet ingredient supply system 22 comprise progressive cavity pumps with inline flow meters. In the illustrated embodiment, each liquid ingredient has its own pump metering system.

In embodiments, at least two liquid ingredients can be blended together before being fed together to the continuous mixer 23. In one embodiment, water and latex (e.g., in the form of an emulsion) are pre-blended, while the remaining liquid ingredients (described in detail below) are separately pre-blended or delivered to the continuous mixer separately. In another embodiment, all liquid ingredients are pre-blended together.

In the illustrated embodiment, the wet ingredient supply system 22 includes a combined liquid supply line 74 in fluid communication with the continuous mixer 23 via the wet ingredient inlet 32. In embodiments, the combined liquid supply line 74 is adapted to receive therein at least two liquid ingredients such that said at least two liquid ingredients are blended together in the combined liquid supply line 74. In the illustrated embodiment, wax, preservative, makeup water, and other additives (other than latex) are each independently pumped through the common liquid supply line 74 to the continuous mixer 23. Latex is fed to the continuous mixer 23 via a separate supply line 75. In embodiments, the small volume liquid raw material ingredients, such as di-butyl pthalate, preservative(s), defoamer(s), humectant(s), and other optional additive(s), can be supplied from a tote via a small reservoir tank for use during tote change out. In embodiments, two or more of the liquid ingredients can be pre-mixed together before metered to the continuous mixer 23.

In embodiments, the large volume liquid ingredients such as latex and water can be supplied directly from their respective storage tanks to a respective metering pump. The quantity of water and latex supplied to the continuous mixer 23 can be measured using a metering pump and a flow meter. In embodiments, each ingredient is metered directly into the continuous mixer 23 via its own dedicated metering pump, flow meter, and communication connection to the controller.

In embodiments of systems and methods following principles of the present disclosure, the joint compound is produced with water being one of the wet (or liquid) ingredients. In embodiments, water is added in amounts selected to produce a joint compound of a desired viscosity when made. Typically, the present joint compound in ready-mix form has a viscosity in a range of 300-850 Brabender units at room temperature, and in embodiments, a viscosity in a range of 300-600 Brabender units at room temperature. In embodiments, the viscosity of the joint compound being continuously produced according to principles of the present disclosure can be measured using any suitable technique known to one skilled in the art. For example, in embodiments, any suitable viscometer (such as, a Nametre viscometer, a Brabender viscometer, or a Brookfield viscometer, for example) can be used be to measure the viscosity of the joint compound.

In embodiments, the amount of water included in the joint compound during continuous manufacture is controlled. Water adds to the density of the product when the desired finished product density is less than that of the water itself. In addition, when the amount of water is reduced, resistance to shrinkage and cracking is enhanced.

In embodiments of systems and methods following principles of the present disclosure, the joint compound produced can include latex. In embodiments, suitable latexes include ethylene vinyl acetate, polyvinyl acetate emulsion, and vinyl acetate acrylate latex.

In embodiments, the joint compound can include other liquid ingredients such as, e.g., glycol, di-butyl pthalate, preservative(s), defoamer(s), humectant(s), and various optional liquid additives (such as fungicide) as will be appreciated by one skilled in the art. In embodiments of systems and methods following principles of the present disclosure, the joint compound produced can include glycol. The joint compound can include glycol in an amount to provide desired functional properties to the joint compound such as wet edge, open time, controlling drying time, and freeze/thaw stability. Suitable glycols for use in a joint compound produced according to principles of the present disclosure include diethyl glycol, ethylene glycol, or propylene glycol, for example.

In embodiments of systems and methods following principles of the present disclosure, the joint compound produced can include at least one ingredient to provide for control of microbial growth in wet ready mix joint compound during storage, such as, e.g., a biocide that kills on contact. Examples of contact-kill biocides include household bleach (6% aqueous sodium hypochlorite) or chemicals for shock treatment of swimming pools, such as lithium or calcium hypochlorite. Conventional in-can preservatives, including triazine liquid bactericide, other bactericides, fungicides and/or other organic biocides, can be used for joint compounds for continuing suppression of microbial growth. In embodiments, a preservative can be used in combination with or in place of contact-kill treatment. Combinations of preservatives and/or combinations of contact-kill biocides are also contemplated.

Additional ingredients typically used in joint compounds are contemplated for use in a joint compound produced according to principles of the present disclosure. These ingredients can include, but are not limited to, humectants, fillers, wetting agents, kaolin, dibutyl pthalate, defoamers, humectants, rheology modifiers, and plasticizers.

In at least some embodiments, at least one ingredient (or a portion of such ingredient) can be separately fed to the mixed joint compound after the mixed composition exits the outlet 34 of the continuous mixer 23. For example, a defoamer may be added to the mixed joint compound after the ingredients have been mixed together in the continuous mixer 23 to form the mixed joint compound composition.

In embodiments, a system constructed according to principles of the present disclosure can include different and/or additional equipment from the system 20 depicted in FIG. 1, as will be appreciated by one skilled in the art. For example, in embodiments, sensors can be provided at one or more locations in the system 20 which are adapted to measure any number of characteristics of the at least one component of the system and/or the joint compound being produced. In one embodiment, a sensor is disposed at a location that is downstream of the outlet 34 of the continuous mixer 23 and upstream of the inlet 45 of the homogenizing device 25. A second sensor can be disposed at a location that is downstream of the outlet 47 of the homogenizing device 25. The sensors can operate by being physically contacted by the joint compound flowing through the conduit connecting the continuous mixer 23 to the homogenizing device 25 and the homogenizing device 25 to the packaging station 29, respectively.

In embodiments, the sensors can comprise flowrate meters. In other embodiments, the sensors can be located at any suitable location and can comprise any suitable type of sensor, such as, for example, pressure gauges, strain gauges, temperature sensors, and other known sensors that can measure any number of characteristics of the ingredients, the mixed joint compound, and/or the homogenized joint compound.

The system 20 includes a controller (not shown) communicatively coupled to any number of components thereof using any known wired and/or wireless communication protocol. The controller can comprise any type of electronic processing device capable of performing calculations and/or executing logical tasks. In embodiments, the controller may include any number of processors, inputs, transitory and non-transitory memory modules, displays, outputs, and any additional components as will be appreciated by one skilled in the art.

In embodiments, data obtained from at least one sensor of the system 20 can be transmitted to the controller and displayed to a user. This information may be useful in determining whether material characteristics (e.g., a joint compound's flow rate) fall within a predetermined production range. In the event that one of the characteristics falls outside of the desired production range, the controller can display a notification message to the use and/or automatically control an operational parameter to adjust the process conditions to vary the characteristic such that it moves into the predetermined production range. For example, in embodiments, the controller comprises a feedback controller adapted to receive or calculate a difference between estimated and measured sensor values and adjust parameters (such as, for example a feed rate) of any of the dry ingredients and/or wet ingredients in response to the measured sensor value. The controller may also be adapted to adjust an operating speed of the continuous mixer and/or the homogenizing device.

Referring to FIG. 1, the continuous mixer 23 is arranged with the dry and wet ingredient supply systems 21, 22 in order to receive wet and dry ingredients therefrom which are combined together within the continuous mixer 23 to continuously produce joint compound. In embodiments, the continuous mixer 23 can comprise any suitable mixer configured to combine at least one dry ingredient and at least one liquid ingredient such as, for example, the ingredients fed to the continuous mixer 23 in FIG. 1 by the dry and wet ingredient supply systems 21, 22. In embodiments, the continuous mixer 23 can have any suitable output rate.

The continuous mixer 23 has at least one mixer inlet 31 and a mixer outlet 34. The continuous mixer 23 is adapted to receive joint compound ingredients including at least one dry ingredient and at least one liquid ingredient via said at least one mixer inlet 31, to continuously mix the joint compound ingredients to form a mixed joint compound composition, and to discharge the mixed joint compound composition from the mixer outlet 34.

In embodiments, the continuous mixer 23 includes a housing 80 defining a mixing chamber 81 therein, at least one dry ingredient inlet 31 for conveying dry ingredient ingredients into the mixing chamber 81, at least one liquid ingredient inlet 32 for conveying liquid ingredients into the mixing chamber 81, and an outlet 34 for dispensing mixed joint compound from the housing 80 of the continuous mixer 23. The mixing chamber 81 can be configured to define a flow path between the ingredient inlets 31, 32 and the outlet 34.

In embodiments, the housing 80 of the continuous mixer 23 is in the shape of a cylindrical drum with a shell configuration. In at least some embodiments, the continuous mixer 23 has an outer shell and a rotating inner shell with paddles in a vertical oriented configuration.

In embodiments, the continuous mixer 23 includes a suitable agitator 82 disposed within the mixing chamber 81 and configured to help mix the constituent ingredients into mixed joint compound. The agitator 82 can be mounted in the mixing chamber 81 in any number of configurations to be disposed in the flow path such that the materials interact with the agitator 82 as they move along the flow path from the inlets 31, 32 to the outlet 34 of the housing 80.

In embodiments, the agitator 82 comprises a rotary agitator that is selectively operated via a controlled motor. In embodiments, the rotary agitator 82 is equipped with structure configured to promote mixing, such as a suitable arrangement of paddles and/or blades to assist in mixing any materials added thereto. In embodiments, the continuous mixer 23 is configured to permit the rate of rotation of the agitator 82 to be varied over a predetermined range. In embodiments, the agitator 82 of the continuous mixer 23 has a self-cleaning configuration that is configured to help prevent buildup of joint compound ingredients on internal parts, which might create unacceptable lumps of hardened material.

In embodiments, the agitator 82 comprises at least one shaft disposed within the mixing chamber 81 defined by the housing 80 and configured to incorporate and mix the materials together and to move the material longitudinally through the continuous mixer 23. In embodiments, the agitator 82 of the continuous mixer 23 comprises two horizontal shafts, each shaft with a screw section and a plurality of mixing/kneading elements. In embodiments, the shafts 82 in the continuous mixer 23 are co-rotating. In other embodiments, the shafts 82 in the continuous mixer 23 are counter-rotating.

In embodiments, the agitator 82 comprises a squirrel cage type rotor. For example, in embodiments, the continuous mixer 23 can be a suitable commercially-available mixer with a squirrel cage type rotor, such as a Microcut MC series mixer from Stephan Machinery GmbH of Germany (a.k.a. ProXES Group or Systems).

In embodiments, the mixing action generated by the continuous mixer 23 can be adjusted as a result of both the agitation from the configuration of the agitator 82 (such as by varying the position and/or number of the paddles on the shaft in embodiments where the agitator 82 comprises at least one rotatable shaft with mixing paddles) and the retention time of the joint compound ingredients within the mixing chamber 81. In embodiments, the continuous mixer 23 includes structure configured to act as a means for controlling retention time of the joint compound ingredients within the mixing chamber. For example, in embodiments, the outlet 34 of the continuous mixer is equipped with a slide gate that is movable to adjust the size of the outlet opening, thereby varying the output rate from the mixing chamber 81 to control residence time. By varying the position of the adjustable slide gate at the discharge outlet 34, the retention time of constituent ingredients within the mixing chamber 81 of the continuous mixer 23 can be correspondingly varied. In other embodiments, the outlet 34 can be equipped with baffles or size restrictors to change the size of the opening of the outlet 34 help control residence time within the mixing chamber 81.

In embodiments, the retention time of the ingredients within the mixing chamber 81 can be increased when the joint compound being produced has a grainy appearance. By increasing the retention time in the mixing chamber 81 by restricting flow at the outlet 34 of the continuous mixer 23, the resultant ready mix joint compound can have a desired creamy, not grainy, appearance.

In use, the feeders 51 and the pumps 71 of the ingredient supply systems 21, 22 may feed at least one of the dry and/or liquid ingredients to the continuous mixer 23 at a rate different from the intended or set feed rate. In embodiments, the homogenizing device 25 includes a homogenizing chamber 41 having an internal capacity and/or structure for controlling the residence time of the mixed joint compound within the homogenizing chamber 41 of the homogenizing device 25 configured to reduce variation in at least one joint compound material property (e.g., viscosity) across multiple successively produced volumetric units of mixed joint compound (relating to standard commercial packaging sizes for joint compound, such as five-gallon (~18.9 liters) buckets, for example) that may be caused by variations in the feed rate of at least one ingredient to the continuous mixer 23.

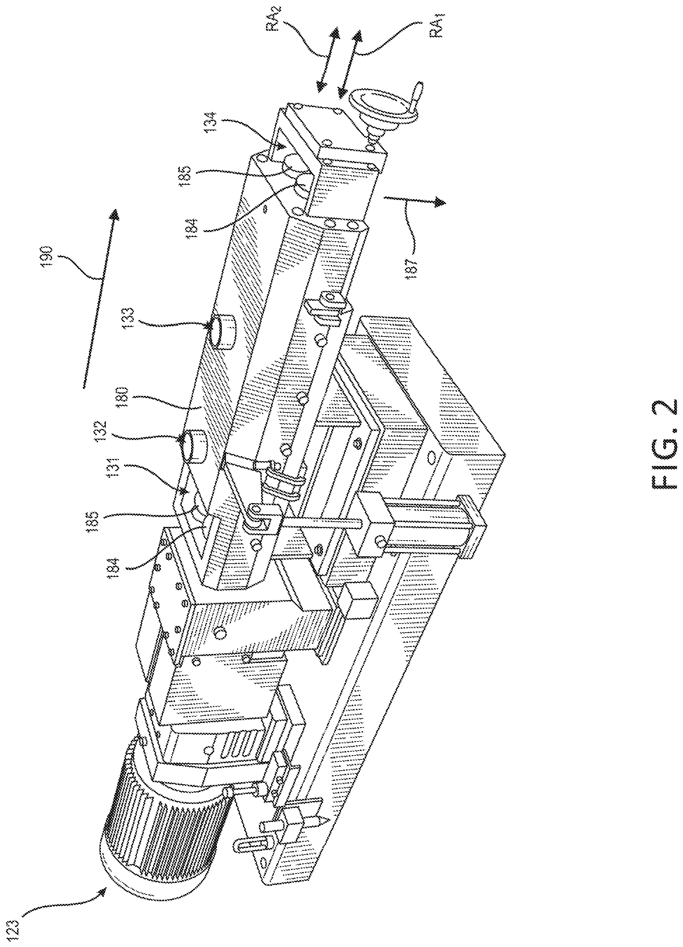

Referring to FIG. 2, an embodiment of a continuous mixer 123 in the form of a continuous processor is shown that is suitable for use in a system for continuously manufacturing a joint compound constructed according to principles of the present disclosure. In embodiments, the continuous mixer 123 comprises a commercially-available continuous processor from Readco Kurimoto, LLC of York, Pennsylvania. The continuous processor 123 comprises an agitator in the form of a pair of co-rotating shafts 184, 185 with mixing elements thereon, the shafts 184, 185 being configured to mix one or more dry materials with one or more liquid materials on a continuous basis to produce a mixed joint compound composition at the discharge end of the unit.

The continuous processor 123 includes a housing 180, generally in the shape of a horizontal barrel, that defines a dry ingredient inlet 131 and multiple mixing chamber liquid ingredient feed inlets 132, 133. The housing 180 defines a radial flow discharge outlet 134 that is configured to dispense mixed joint compound in a direction 187 substantially perpendicular relative to the rotational axes RA₁, RA₂ (the respective longitudinal axes) of the co-rotating shafts 184, 185. The discharge outlet 134 can be equipped with an adjustable slide gate to help control the output rate of the continuous processor 123.

In embodiments, the barrel housing 180 can have any suitable size. In embodiments, the barrel housing 180 can have a two-inch (~5.1 cm) nominal diameter or a five-inch (~12.7 cm) nominal diameter. In other embodiments, the continuous processor 123 can have a different size. The housing 180 can have a clamshell barrel with a wear-resistant barrel liner. In embodiments, the clamshell 180 can be selectively movable via a suitable power source (e.g., a hydraulic, pneumatic, or electrically actuated barrel).

In embodiments, the continuous mixer 123 includes at least one shaft 184, 185 disposed within the mixing chamber defined by the housing 180 and configured to incorporate and mix the materials together and to move the material longitudinally through the continuous mixer 123 along the rotational axes RA₁, RA₂ of each shaft 184, 185 disposed in the housing 180. In embodiments, each shaft 184, 185 is rotatable about its rotational axes RA₁, RA₂ which is coaxial with its longitudinal axis and substantially aligned with the flow path through the housing 180.

In the illustrated embodiment, the continuous mixer 123 includes two shafts 184, 185 disposed within the mixing chamber defined by the housing 180. In at least some embodiments, the pair of shafts 184, 185 within the mixing chamber defined by the housing 180 are configured to be co-rotational such that both of the shafts 184, 185 rotate in the same rotary direction about their respective longitudinal axis RA₁, RA₂. In at least some embodiments, the pair of shafts 184, 185 within the mixing chamber of the continuous mixer 123 are configured to be counter-rotational such that the shafts 184, 185 rotate in opposing rotary directions about their longitudinal axis RA₁, RA₂. In embodiments, each shaft 184, 185 can include an auger or screw portion configured to help move the material longitudinally through the mixer 123 and a mixing element portion configured to incorporate and mix the materials together. In embodiments, the mixing element portion can include any suitable structure, including, for example, paddles or blades.

In embodiments, the continuous processor 123 includes horizontal co-rotational shafts 184, 185 with close tolerances between the paddles mounted to the shafts 184, 185 resulting in a kneading and wiping action. The rotating shafts 184, 185 and close clearances between paddles and between the paddles and the walls of the barrel housing 180 can help provide efficient uniform mixing in less time than a conventional batch type mixer. The construction of the shafts 184, 185 and the housing 180 can help prevent material build up inside the processor barrel and can result in a self-wiping action that can eliminate lumps and reduce clean-up time.

In at least some embodiments, at least one ingredient (or a portion of such ingredient) can be separately fed to a separate inlet 131, 132, 133 of the continuous mixer 23. For example, in embodiments, a majority portion of the liquid ingredients is fed to a first inlet 132 at a first location along the line of flow within the mixing chamber 123 of the continuous mixer 123, and a smaller portion of the liquid ingredients is fed to a second inlet 133 at a second location along the line of flow within the mixing chamber of the continuous mixer 123. The second location can be located downstream of the first location closer to the outlet 134 of the continuous mixer 123 in a direction of flow 190 of the mixed joint compound. For example, such technique can be used to help achieve better mixing of more viscous joint compound, and then obtain a desired viscosity by introducing a small amount of water at the downstream second inlet 133 of the mixer 123.

In at least some embodiments where a shaft 184, 185 of the continuous processor 123 is equipped with a screw, at least one wet ingredient inlet 132, 133 is disposed at least more than one pitch length downstream of the dry ingredient inlet 131. In at least some embodiments, at least one wet ingredient inlet 133 is disposed closer to the discharge outlet 134 than to the dry ingredient inlet 131 (moving along the flow path).

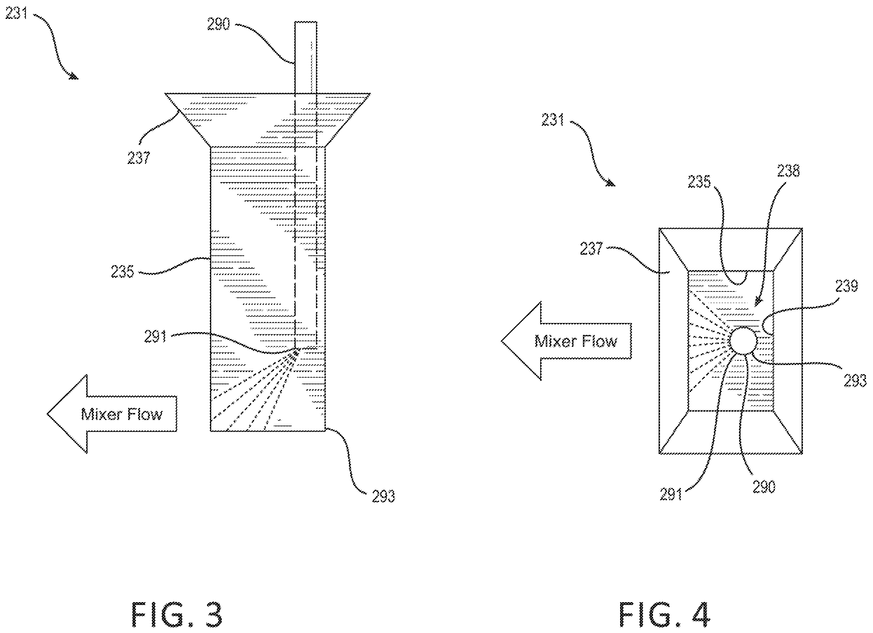

Referring to FIGS. 3 and 4, there is shown an embodiment of a dry ingredient inlet 231 for a continuous mixer suitable for use in a system for continuously manufacturing a joint compound which is constructed in accordance with principles of the present disclosure. The dry ingredient inlet 231 is in the form of a chute 235 with a tapered upper funnel portion 237 to help receive dry ingredients from the dry ingredient supply system.

The chute 235 defines a chute passage 238 and an opening 239 in communication with the chute passage 238. The opening 239 of the chute 235 can be placed in communication with the dry ingredient supply system to receive at least one dry ingredient in the chute passage 238 through the opening 239.

In embodiments, the wet ingredient supply system includes a sprayer 290 with a nozzle 291. The nozzle 291 is disposed within the chute passage 238. The sprayer 290 is in fluid communication with a supply of water and is adapted to selectively spray water in the chute 235.

A bottom 293 of the downspout chute 235 is adapted to be in communication with the mixing chamber of the continuous mixer, such as by being fitted to the dry ingredient inlet 131 of the continuous processor 123 shown in FIG. 2, for example. In embodiments, the size and/or shape of the chute 235 can be varied in order to provide a mating fit between the chute 235 and the continuous mixer used in the system. The ingredient(s) from the dry ingredient supply system and the water discharged through the nozzle 291 can be conveyed through the chute passage 238 into the mixing chamber of the continuous mixer during operation of the system for continuously manufacturing a joint compound constructed in accordance with principles of the present disclosure.

In embodiments, the water sprayer 290 can be oriented to spray water in the chute 235. The water sprayer 290 can be mounted using any suitable technique as will be appreciated by one skilled in the art. In embodiments, the nozzle 291 can be disposed in a lower half of the chute 235 nearer the continuous mixer, as is shown in FIG. 3, and in the lower third of the chute 235 nearer the continuous mixer in other embodiments. In the illustrated embodiment, the spray nozzle 291 is located in the lower quarter of the chute 235 nearer the continuous mixer. In embodiments, the spray nozzle 291 is located at least five inches (~12.7 cm) above the bottom 293 of the downspout chute 235, at least eight inches (~20.3 cm) in other embodiments, and at least two inches (~5.1 cm) above the bottom 293 of the downspout chute 235 in yet other embodiments.

In embodiments, water sprayed from the nozzle 291 is metered from the wet ingredient supply system. In embodiments, the nozzle 291 is configured to dispense water as atomized droplets. In embodiments, the nozzle 291 is configured to dispense water directionally in a radial outward manner from the nozzle 291, as is shown in FIG. 4. In embodiments, the nozzle 291 is configured to dispense water as a directional spray with droplets spraying out of about one hundred eighty degrees or less of the circumference 293 of the nozzle 291 and the remainder of the circumference 293 with no flow, as is shown in FIG. 4. In embodiments, the nozzle 291 is configured to dispense water as a directional spray with droplets spraying out of about one hundred twenty degrees or less of the circumference 293 of the nozzle 291, and the remainder of the circumference 293 with no flow (such as is shown in FIG. 4).

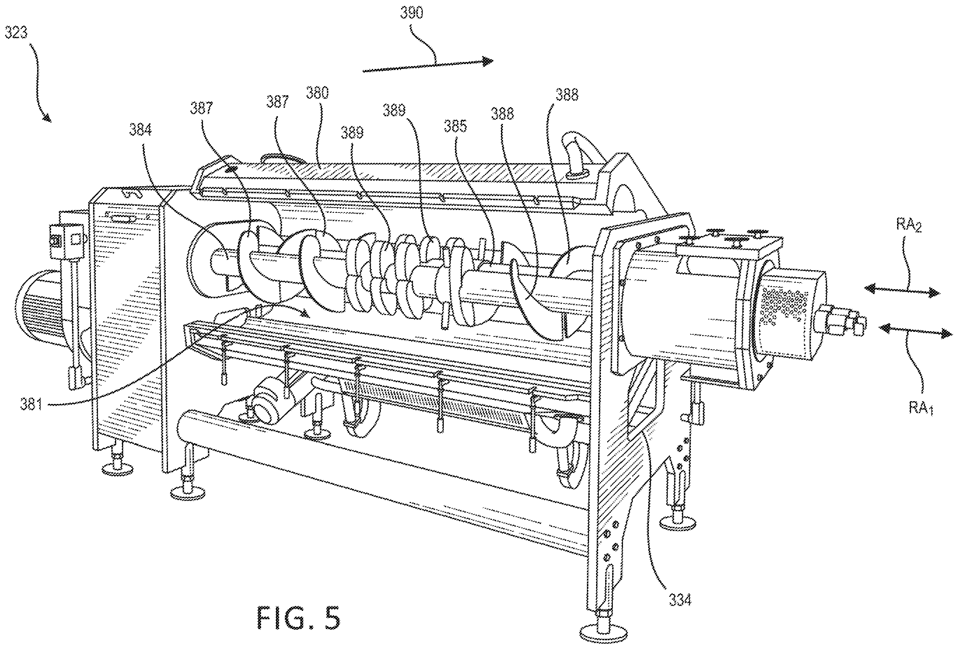

Referring to FIG. 5, an embodiment of a continuous mixer 323 is shown that is suitable for use in a system for continuously manufacturing a joint compound constructed according to principles of the present disclosure. In embodiments, the continuous mixer 323 comprises a commercially-available mixer from Exact Mixing, a division of Reading Bakery Systems of Robesonia, Pennsylvania. In embodiments, the continuous mixer 323 comprises the MX model mixer from Exact Mixing. The continuous mixer 323 of FIG. 5 includes an agitator in the form of a pair of counter-rotating shafts 384, 385 configured to mix one or more dry materials with one or more liquid materials on a continuous basis to produce a mixed joint compound composition at the discharge end of the unit.

The continuous mixer 323 of FIG. 5 includes a housing 380 and a pair of shafts 384, 385. The housing 380 defines a mixing chamber 381. The pair of shafts 384, 385 extend within the mixing chamber 381 and are rotatable about a respective longitudinal axis RA₁, RA₂.

The housing 380 of the continuous mixer 323 of FIG. 5 comprises a clamshell housing, generally in the shape of a horizontal barrel. In embodiments, the housing 380 defines a dry ingredient inlet and at least one liquid ingredient feed inlet with the inlets being in communication with the mixing chamber 381 defined within the housing 380. The housing 380 defines an axial flow discharge outlet 334 that is configured to dispense mixed joint compound in an axial direction substantially parallel to the rotational axes of the counter-rotating shafts 384, 385.

In embodiments, the housing 380 can have any suitable size. In embodiments, the housing 380 can have a six-inch (~15.2 cm) nominal diameter (corresponding to the Model MX six-inch (~15.2 cm) mixer from Exact Mixing). In other embodiments, the housing 380 of the continuous mixer 323 can have a different size.

In embodiments, the interior of the housing 380 can be made from stainless steel. In embodiments, the housing 380 can have a jacketed construction and adapted to have a thermal heat transfer medium conveyed therethrough. In embodiments, the housing 380 can define barrel vent ports along the barrel length to permit the removal of gas from the mixed materials or the addition of dry or wet ingredients.

In embodiments, each shaft 384, 385 including a screw section 387. In embodiments, the shafts 184, 185 of the continuous processor 123 can have at least a portion 387 thereof equipped with screw elements to help convey product therethrough. In embodiments, a distal discharge end portion 388 of the shafts 384, 385 comprises a screw section that is equipped with screw flights. In embodiments, each shaft 384, 385 has end screw sections 387, 388 to help convey material through the mixer 323 continuously and an intermediate mixing section 389 that is disposed between the end screw sections 387, 388 and is equipped with mixing or kneading elements configured to blend and mix the raw materials into the finished product.

In the illustrated embodiment of FIG. 5, the pair of shafts 384, 385 have substantially the same construction. In the illustrated embodiment of FIG. 5, the shafts 384, 385 of the continuous mixer 323 each includes mixer sections 389 that are equipped with paddles that extend radially from the respective shaft 384, 385.

In embodiments, the continuous mixer 323 can include a shaft 384, 385 having a first mixer section with paddles that are thicker (measured along the longitudinal axis of the shaft) than the paddles of a second mixer section located downstream in a direction of flow 390 of the material through the continuous mixer 323. In other embodiments, the position and arrangement of the conveying section 387, 388 (in the form of a screw or auger, for example) and mixing sections 389 can be varied.

In embodiments, the portions of the shafts 384, 385 disposed within the mixing chamber 381 are made from ultra-high molecular weight polyethylene. In other embodiments, the shafts 384, 385 can be made from another suitable material, such as, stainless steel, for example. In embodiments, the shafts 384, 385 can include cored paddle shafts for additional heating or cooling capacity.

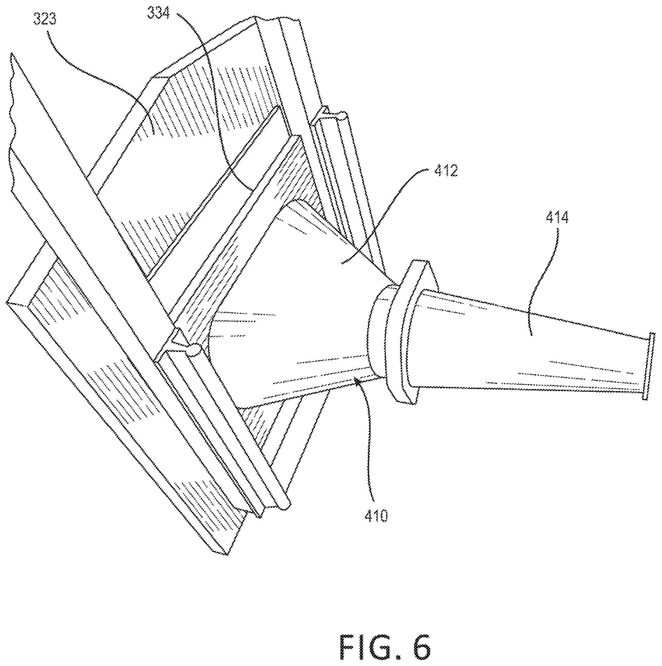

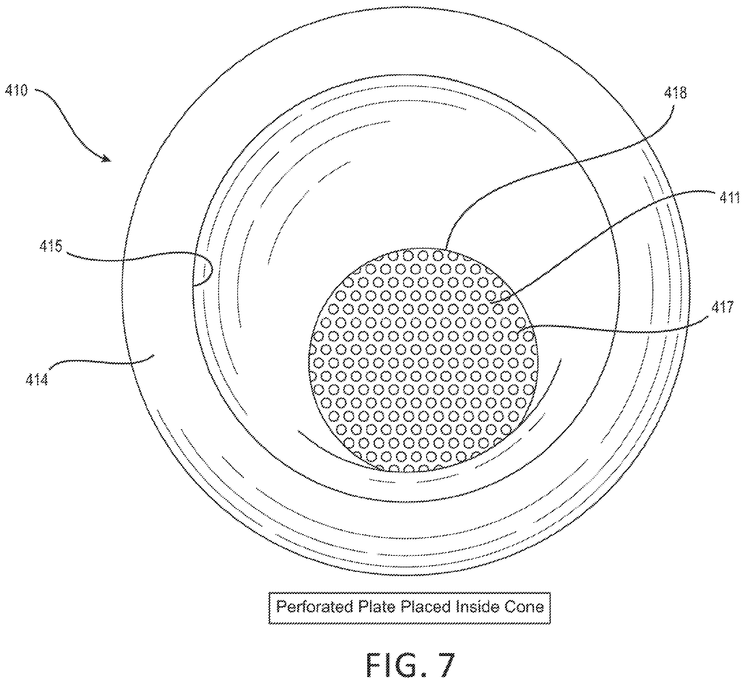

Referring to FIG. 6, the discharge outlet 334 of the continuous mixer 323 of FIG. 5 can be equipped with one of a variety of different clamp-on discharge fittings 410. The discharge fitting 410 is mounted to the discharge outlet 334 and is configured to control a characteristic of the joint compound being dispensed from the continuous mixer 323 of FIG. 5. In the illustrated arrangement, the axial discharge outlet 334 of the continuous mixer 323 is equipped with a discharge fitting 410 in the form of a discharge cone having a perforated plate 411 installed therein (see FIG. 7).

The discharge fitting illustrated in FIG. 6 includes a proximal discharge transition 412 that leads to a terminal cone portion 414. Referring to FIG. 7, the terminal portion 414 defines an outlet opening 415 and the perforated plate 411 is disposed within the outlet opening 415. In embodiments, the perforated plate 411 can have a suitable void ratio (i.e., the ratio of aggregate surface area of the openings 417 defined in the perforated plate to the area of the plate defined by its outer circumference 418) in order to help promote obtaining a desired characteristic of the mixed joint compound being dispensed from the discharge fitting 410. For example, in embodiments, the perforated plate 411 is configured to help produce a joint compound that has a creamy (rather than grainy) consistency. In embodiments, a discharge fitting 410 with a restriction can be mounted to the axial discharge outlet 334 of the continuous mixer 323 to help reduce the occurrence of lumps in the mixed joint compound being continuously produced by the mixer 323 of FIG. 5 for a given joint compound formulation.

In embodiments, the discharge fitting 410 can be configured to help produce backpressure within the continuous mixer 323 to help accommodate variations in feed rates of ingredients delivered to the continuous mixer 323. In embodiments, the continuous mixer 323 can continue to operate through variations in the delivery of one or more ingredients, such as that occur during a feeder refill operation. In embodiments, the shafts 384, 385 of the mixer 323 are powered in such a way as to enable the continuous mixer 323 to continue to dispense mixed joint compound from the axial discharge outlet 334 during periods of higher viscosity joint compound production (such as, because the amount of liquid ingredients delivered to the continuous mixer is reduced).

In embodiments, the continuous mixer is configured to produce joint compound under conditions that generate pressure within the flow of joint compound being dispensed from the continuous mixer such that the mixed joint compound can be conveyed to the homogenizer without the aid of a supplemental pump or other device requiring an energy input. In embodiments, the continuous mixer is configured to dispense mixed joint compound under pressure such that the mixed joint compound can be conveyed directly to the homogenizer without an additional intervening mechanical energy input. In such arrangements, the joint compound can be conveyed from the continuous mixer to the homogenizer via any suitable conduit, such as a flexible hose, for example.

In embodiments, a different discharge fitting can be mounted to the axial discharge outlet of the continuous mixer of FIG. 5. For example, in embodiments, the shape and/or size of the discharge fitting can be varied. In embodiments, the shape and/or configuration of the discharge passage defined by the discharge fitting can be varied.

In embodiments, the continuous mixer can be equipped with a variable speed control that is configured to adjust the rotational speed of the shafts. In embodiments, the mixer speed can be adjusted in order to reduce the occurrence of lumps in the joint compound being continuously produced by the mixer of FIG. 5 for a given joint compound formulation. In general, it has been found that as mixer speed is increased, the production rate increases and the occurrence of lumps for a given joint compound formulation is reduced. It has been found that viscosity of the joint compound produced is reduced as mixer speed is increased. And, as mixer speed is increased, the density of the joint compound produced is reduced. Without being bound by any particular theory, it is thought that density is reduced as speed is increased because air is entrained into the joint compound at a greater rate with increased mixer speed.

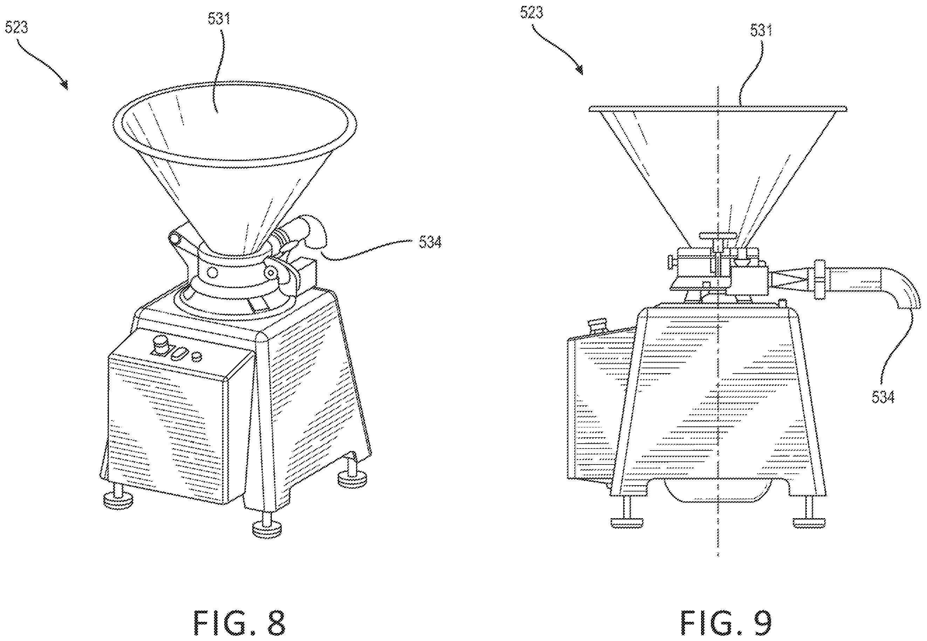

Referring to FIGS. 8 and 9, an embodiment of a continuous mixer 523 is shown that is suitable for use in a system for continuously manufacturing a joint compound constructed according to principles of the present disclosure. In embodiments, the continuous mixer 523 comprises a continuous mixer with an agitator in the form of a squirrel-cage type rotor. In embodiments, the continuous mixer 523 comprises a commercially-available mixer from ProXES System Solutions (c/o Stephan Machinery GmbH of Germany), such as a Microcut Machine fitted with a squirrel cage type rotor.

In one embodiment, the continuous mixer 523 comprises a Microcut MC 15 Machine available in the United States from ProXES System Solutions. The continuous mixer 523 includes a squirrel-cage type rotor which agitates in a cutting action. The wet and dry ingredients are fed via a single hopper 530 through the cutting system, thereby becoming mixed together and are discharged in a continuous process via a discharge outlet 534.

In embodiments, the continuous mixer 523 comprises a pair of Microcut MC 15 Machines arranged in series with each other. Wet and dry ingredients are fed to the funnel-shaped inlet 530 of the first mixer. The mixed joint compound dispensed from the discharge outlet 534 of the first mixer is fed to the funnel-shaped inlet 531 of the second mixer. In at least some embodiments, the joint compound dispensed from the second microcut machine is fed to the homogenizing device 25.

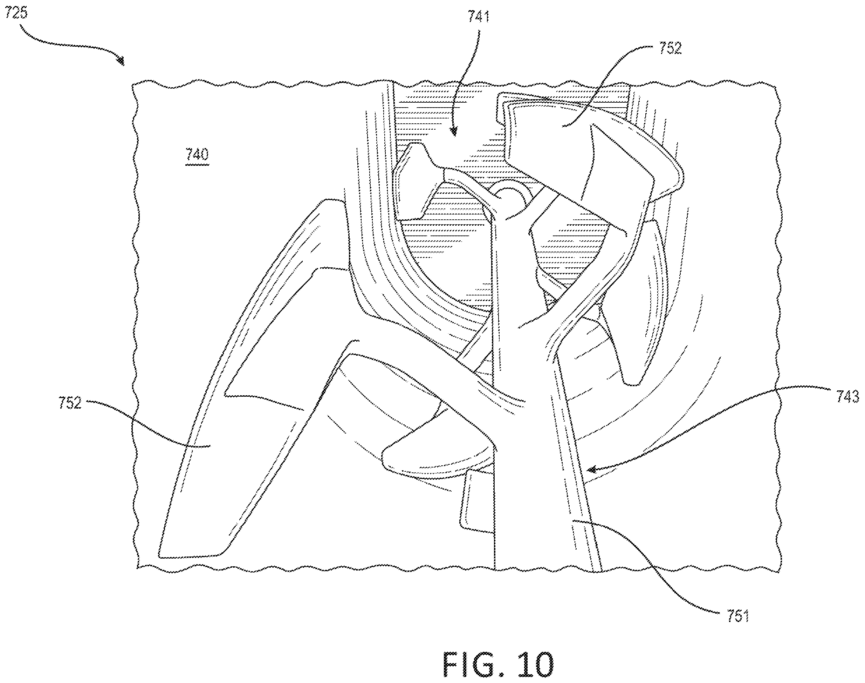

Referring to FIG. 10, there is shown an example of means for homogenizing multiple volumetric units of mixed joint compound to reduce variation in at least one joint compound material property (e.g., viscosity) across multiple successively produced volumetric units of mixed joint compound (relating to a standard commercial packaging size for joint compound, such as a five-gallon (~18.9 liters) pail, for example) relative to the material property of the respective multiple volumetric units before passing through the means for homogenizing. FIG. 10 depicts an embodiment of a homogenizing device 725 that is suitable for use in a system for continuously manufacturing a joint compound constructed according to principles of the present disclosure.

The homogenizing device 725 includes a housing 740 defining a homogenizing chamber 741 and a rotary mixing element or agitator 743 disposed within the homogenizing chamber 741. In the illustrated embodiment, the agitator 743 is in the form of a shaft 751 equipped with paddles 752. Such an arrangement is commercially available from Marion Process Solutions (Marion Mixers, Inc.) of Marion, Iowa. In embodiments, the homogenizing device 25 includes a single horizontal shaft 751 equipped with a number of broad paddles 752 (e.g. six) extending from the shaft 751 in a twelve-inch (~30.5 cm) radius and is operated at 400 rpm or less. In embodiments, the shaft 751 of the homogenizing device 725 is operated at 200 rpm or less, 100 rpm or less other embodiments, and 50 rpm less in yet other embodiments.

In embodiments, a system for continuously manufacturing a joint compound constructed according to principles of the present disclosure does not include a disperger. In embodiments, the agitator 743 of the homogenizing device 725 is operated under conditions of shear lower than that generated by an agitator of a disperger, such as, e.g., a Shear-Master disperger commercially available from BVG Bauer Verfahrenstechnik GmbH of Germany (BVG, Inc., Charleston, South Carolina). In embodiments, the agitator 743 of the homogenizing device 725 is operated under conditions of shear that are lower by an order of magnitude than the conditions of shear generated by an agitator of a disperger.

In a method of continuously manufacturing a joint compound following principles of the present disclosure, a system for continuously manufacturing a joint compound constructed according to principles of the present disclosure is used to make joint compound on a continuous basis as discussed herein. In embodiments, a method of method of continuously manufacturing a joint compound following principles of the present disclosure can be used with any embodiment of a system for continuously manufacturing a joint compound according to principles discussed herein.

In embodiments of a method of continuously manufacturing a joint compound according to principles of the present disclosure, both the dry ingredients and liquid ingredients are simultaneously fed into a continuous mixer. The dry and liquid ingredients are mixed in the continuous mixer for a predetermined period of time, to form a mixed joint compound composition which then flows from the mixer. In a particularly preferred embodiment, all ingredients are continuously fed into the mixer, and the mixed joint compound composition produced therein is continuously dispensed from the mixer.

The mixed joint compound composition is processed in a homogenizing device. The homogenizing device blends together a quantity of mixed joint compound composition that is larger than at least three times the size of the joint compound package size being packed by the packaging system (such as, a five-gallon (~18.9 liters) bucket, or pail, for example) in order to reduce variation in properties, such as viscosity or density, across larger quantities of the joint compound. The homogenizing device helps to make the properties of the finished product to be similar from pail to pail, and it accomplishes this by blending several pails of joint compound together in a continuous fashion, thereby helping the properties of any given pail to be closer to the time weighted average of the properties of successively produced pails of product. In embodiments, the homogenizing device is configured such that the mixing chamber of the homogenizing device has a capacity that is at least one tenth of the rate at which homogenized material is being dispensed from the homogenizing device.

The method of continuously manufacturing a joint compound includes feeding joint compound ingredients comprising at least one dry ingredient and at least one wet ingredient to a continuous mixing apparatus. The joint compound ingredients are continuously mixed using the continuous mixing apparatus to form a mixed joint compound composition. Multiple volumetric units of the mixed joint compound are homogenized to reduce variation in at least one material property of the mixed joint compound relative to each of said material properties of the respective multiple volumetric units before undergoing the homogenizing.

The step of homogenizing multiple volumetric units of the mixed joint compound comprises transporting the mixed joint compound composition into a homogenizing device via an inlet of the homogenizing device and mixing the mixed joint compound composition under shear conditions in the homogenizing device via a rotary mixing element rotating at a speed or 400 rpm or less. In at least some of such embodiments, the continuous mixing apparatus comprises a main continuous mixing apparatus and wherein transporting the mixed joint compound composition includes passing the mixed joint compound composition through a secondary continuous mixing apparatus interposed between the main continuous mixing apparatus and the homogenizer.. In at least some of such embodiments, the step of homogenizing multiple volumetric units of the mixed joint compound reduces variation in viscosity across multiple successively produced volumetric units of mixed joint compound such that the viscosity of the joint compound being dispensed from an outlet of the homogenizing device varies by an amount of ten percent or less using a predetermined sampling technique. In at least some of such embodiments, the step of homogenizing multiple volumetric units of the mixed joint compound comprises subjecting the multiple volumetric units of the mixed joint compound to conditions of shear such that an average viscosity of the mixed joint compound being dispensed from an outlet of the homogenizing device is at least ninety percent of the average viscosity of the mixed joint compound being transported to the inlet of the homogenizing device using a predetermined sampling technique
In embodiments, the resulting joint compound can be a composition having between approximately 50-90% solids and the remaining volume being liquids. In other embodiments, different compositions are possible. The homogenized joint compound can be packaged via a suitable packaging technique known to one skilled in the art or placed in one or more holding or storage tanks for processing at a later time. The foregoing method can continuously produce joint compound at any desired rate depending on the size and characteristics of the continuous mixer and the homogenizing device.

Any of the joint compound products described herein can be assembled as part of a building system by being applied at the edges of adjacent building panels fastened (e.g., a screw, a nail) to a suitable framing structure (e.g., one or more wall studs or ceiling joists). Two adjacent panels can be joined at the seams using any suitable technique, such as by applying a suitable joint tape and the joint compound produced according to principles of the present disclosure.

Embodiments of a method of continuously manufacturing a joint compound following principles of the present disclosure can help improve the quality and consistency of the joint compound so produced. The use of loss-in-weight feeders and pumps in the supply systems can help reduce "batch-to-batch" variations found when employing manual feeding typical of many conventional batch production techniques. Embodiments of a method of continuously manufacturing a joint compound following principles of the present disclosure can help reduce the cost of labor by eliminating the many manual operations involved with batch mixing.

Embodiments of a method of continuously manufacturing a joint compound following principles of the present disclosure can help reduce the production cycle time by removing steps that are inherent to batch mixing. Downtime can also be reduced, including a reduction in the time required to clean equipment by virtue of the reduction in equipment size used for continuous processing.

Embodiments of a method of continuously manufacturing a joint compound following principles of the present disclosure can help reduce waste. Because the continuous processors only work on a small quantity of material at a time, there is less work in progress during a product changeover, and the amount of scrap is greatly reduced if an upset condition occurs.

Embodiments of a method of continuously manufacturing a joint compound following principles of the present disclosure can help reduce material costs. For example, costs can be reduced by more closely limiting the amount of a given ingredient used in the formulation as is possible using supply systems of the present disclosure. Additionally, some formulations which are used for convenience based upon the packaging of materials for use in a bulk manufacturing technique can be refined to use less product according to the desired property. For example, if a product is purchased in fifty-pound bags (~22.7 kg), and the product could be formulated with only forty-five pounds (~20.4 kg) of the material to get the desired properties, it could be formulated at forty-five pounds (~20.4 kg) rather than the fifty-pound (~22.7 kg) amount typically formulated for conventional batch processing.

Embodiments of a method of continuously manufacturing a joint compound following principles of the present disclosure can help improve joint compound quality by providing the ability to fine-tune the joint compound formulation on the fly. In embodiments, an operator can respond quickly when product quality begins to drift away from a desired range, as compared to waiting for the next batch to make a formulation change.

The use of the terms "a" and "an" and "the" and similar referents in the context of describing the invention (especially in the context of the embodiments and claims herein) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A system (20) for continuously manufacturing a joint compound, the system (20) comprising:
a controller;
a continuous mixer (23, 123, 323, 523), the continuous mixer (23, 123, 323, 523) having at least one mixer inlet (31, 32) and a mixer outlet (34), the continuous mixer (23, 123, 323, 523) being adapted to receive joint compound ingredients including at least one dry ingredient and at least one liquid ingredient via said at least one mixer inlet (31, 32; 131, 132, 133; 231), to continuously mix the joint compound ingredients to form a mixed joint compound composition, and to discharge the mixed joint compound composition from the mixer outlet (34), wherein the at least one mixer inlet (31, 32) of the continuous mixer (23, 123, 323, 523) comprises at least one dry ingredient inlet (31) and at least one wet ingredient inlet (32);
a homogenizing device (25, 725), the homogenizing device (25, 75) disposed downstream of the continuous mixer (23, 123, 323, 523), the homogenizing device (25, 725) includes a housing (40, 740) defining a homogenizing chamber (41, 741), and a rotary mixing element (43, 743) disposed within the homogenizing chamber (41, 741), the homogenizing device (25, 725) having a homogenizer inlet (45) and a homogenizer outlet (47) both in fluid communication with the homogenizing chamber (41, 741), the homogenizing device (25, 725) being adapted to receive in the homogenizing chamber (41, 741) via the homogenizer inlet (45) the mixed joint compound composition from the mixer outlet (34) of the continuous mixer (23, 123, 323, 523);
a dry ingredient supply system (21), the dry ingredient supply system (21) disposed upstream of the continuous mixer, the dry ingredient supply system (21) being configured to selectively feed said at least one dry ingredient to said at least one dry ingredient inlet (31) of the continuous mixer (23, 123, 323, 523);
a wet ingredient supply system (22), the wet ingredient supply system (22) disposed upstream of the continuous mixer and the wet ingredient supply system (22) is configured to selectively feed at least one liquid ingredient to at least one wet ingredient inlet (32) of the continuous mixer (23, 123, 323, 523); and
a packaging station (29) configured to package volumetric units of joint compound received from the homogenizing device (25, 725) into respective suitable containers;
**characterized in that** the controller is adapted to adjust an operation speed of the homogenizing device to rotate the rotary mixing element (43, 743) under shear conditions in the homogenizing chamber (41, 741) at a speed no greater than 400 rpm.

2. The system for continuously manufacturing a joint compound according to claim 1, wherein the homogenizing chamber of the homogenizing device has a mixing chamber volume that is at least one tenth of a dispensing volume of a volumetric flow rate at which homogenized material is adapted to be dispensed from the homogenizing device per minute.

3. The system (20) for continuously manufacturing a joint compound according to claim 2, wherein the mixing chamber volume of the homogenizing chamber (41, 741) of the homogenizing device (25, 725) has a mixing chamber volume that is at least one half of a dispensing volume of a volumetric flow rate at which homogenized material is adapted to be dispensed from the homogenizing device (25, 725) per minute.

4. The system (20) for continuously manufacturing a joint compound according to claim 1 or claim 2, wherein the rotary mixing element (43) of the homogenizing device (25) includes a rotatable shaft that is adapted to be operated with a tip speed at its circumference no greater than 2500 feet/minute (~762 meters/minute).

5. The system (20) for continuously manufacturing a joint compound according to claim 1 or claim 2, wherein the homogenizing device (25, 725) is configured to blend together a sufficient quantity of joint compound as to reduce variation of values of a joint compound material property across multiple successively produced volumetric units of mixed joint compound relative to the values of the joint compound material property of the respective multiple volumetric units before passing through the homogenizing device (25, 725).

6. The system (20) for continuously manufacturing a joint compound according to claim 5, wherein the homogenizing chamber (41, 741) of the homogenizing device (25, 725) has a capacity configured to accommodate at least three volumetric units of mixed joint compound therein.

7. The system (20) for continuously manufacturing a joint compound according to claim 1 or claim 2, wherein the continuous mixer (323) includes a housing (380) and a discharge fitting (410), the housing (380) defining a mixing chamber (381) and a discharge outlet (334) configured to dispense mixed joint compound from the mixing chamber (381), the discharge fitting (410) having a terminal portion (414) with an outlet opening (415) and a perforated plate (411) disposed within the outlet opening (415).

8. The system (20) for continuously manufacturing a joint compound according to claim 1 or claim 2,
wherein a dry ingredient inlet (231) of the continuous mixer (23, 123, 323, 523) comprises a chute (235), the chute (235) defining a chute passage (238) and an opening (239) in communication with the chute passage (238), the opening (239) of the chute (235) in communication with the dry ingredient supply system (21) to receive at least one dry ingredient in the chute passage (238) through the opening (239), and wherein the wet ingredient supply system (22) includes a sprayer (290) with a nozzle (291), the nozzle (291) disposed within the chute passage (238), the sprayer (290) in fluid communication with a supply of water and adapted to selectively spray water in the chute (235).

9. A method of continuously manufacturing a joint compound **characterized in that** it uses a system according to any one of claim 1 to claim 8, and it comprises:
feeding joint compound ingredients comprising at least one dry ingredient and at least one liquid ingredient to the continuous mixing apparatus (23, 123, 323, 523),
continuously mixing the joint compound ingredients using the continuous mixing apparatus (23, 123, 323, 523) to form a mixed joint compound composition;
homogenizing multiple volumetric units of the mixed joint compound in the homogenizing device (25, 725) to reduce variation in at least one material property of the mixed joint compound relative to each of said at least one material property of the respective multiple volumetric units before undergoing the homogenizing.

## Patentansprüche

1. System (20) zum kontinuierlichen Herstellen einer Fugenmasse, das System (20) umfassend: eine Steuerung;
einen kontinuierlichen Mischer (23, 123, 323, 523), wobei der kontinuierliche Mischer (23, 123, 323, 523) mindestens einen Mischereinlass (31, 32) und einen Mischerauslass (34) aufweist, wobei der kontinuierliche Mischer (23, 123, 323, 523) angepasst ist, um Fugenmassebestandteile einschließlich mindestens eines trockenen Bestandteils und mindestens eines flüssigen Bestandteils über den mindestens einen Mischereinlass (31, 32; 131, 132, 133; 231) aufzunehmen, um die Fugenmassebestandteile kontinuierlich zu mischen, um eine gemischte Fugenmassenzusammensetzung auszubilden, und um die gemischte Fugenmassenzusammensetzung aus dem Mischerauslass (34) auszugeben, wobei der mindestens eine Mischereinlass (31, 32) des kontinuierlichen Mischers (23, 123, 323, 523) mindestens einen Einlass (31) für trockene Bestandteile und mindestens einen Einlass (32) für nasse Bestandteile umfasst;
eine Homogenisierungsvorrichtung (25, 725), wobei die Homogenisierungsvorrichtung (25, 75) stromabwärts des kontinuierlichen Mischers (23, 123, 323, 523) angeordnet ist, die Homogenisierungsvorrichtung (25, 725) ein Gehäuse (40, 740), das eine Homogenisierungskammer (41, 741) definiert, und ein rotierendes Mischelement (43, 743) einschließt, das innerhalb der Homogenisierungskammer (41, 741) angeordnet ist, wobei die Homogenisierungsvorrichtung (25, 725) einen Homogenisierungseinlass (45) und einen Homogenisierungsauslass (47) aufweist, die beide in Fluidverbindung mit der Homogenisierungskammer (41, 741) stehen, wobei die Homogenisierungsvorrichtung (25, 725) angepasst ist, um in der Homogenisierungskammer (41, 741) über den Homogenisierungseinlass (45) die gemischte Fugenmassenzusammensetzung von dem Mischerauslass (34) des kontinuierlichen Mischers (23, 123, 323, 523) aufzunehmen;
ein Versorgungssystem (21) für trockene Bestandteile, wobei das Versorgungssystem (21) für trockene Bestandteile stromaufwärts des kontinuierlichen Mischers angeordnet ist, wobei das Versorgungssystem (21) für trockene Bestandteile konfiguriert ist, um den mindestens einen trockenen Bestandteil dem mindestens einen Einlass (31) für trockene Bestandteile des kontinuierlichen Mischers (23, 123, 323, 523) selektiv zuzuführen;
ein Versorgungssystem (22) für nasse Bestandteile, wobei das Versorgungssystem (22) für nasse Bestandteile stromaufwärts des kontinuierlichen Mischers angeordnet ist und das Versorgungssystem (22) für nasse Bestandteile konfiguriert ist, um mindestens einen flüssigen Bestandteil mindestens einem Einlass (32) für nasse Bestandteile des kontinuierlichen Mischers (23, 123, 323, 523) selektiv zuzuführen; und
eine Verpackungsstation (29), die konfiguriert ist, um volumetrische Einheiten von Fugenmasse, die von der Homogenisierungsvorrichtung (25, 725) aufgenommen werden, in entsprechende geeignete Behälter zu verpacken;
**dadurch gekennzeichnet, dass** die Steuerung angepasst ist, um eine Betriebsgeschwindigkeit der Homogenisierungsvorrichtung einzustellen, um das rotierende Mischelement (43, 743) unter Scherbedingungen in der Homogenisierungskammer (41, 741) mit einer Geschwindigkeit von nicht mehr als 400 U/min zu rotieren.

2. System zum kontinuierlichen Herstellen einer Fugenmasse nach Anspruch 1, wobei die Homogenisierungskammer der Homogenisierungsvorrichtung ein Mischkammervolumen aufweist, das mindestens ein Zehntel eines Abgabevolumens eines Volumendurchflusses beträgt, mit dem homogenisiertes Material angepasst ist, um pro Minute aus der Homogenisierungsvorrichtung abgegeben zu werden.

3. System (20) zum kontinuierlichen Herstellen einer Fugenmasse nach Anspruch 2, wobei das Mischkammervolumen der Homogenisierungskammer (41,741) der Homogenisierungsvorrichtung (25, 725) ein Mischkammervolumen aufweist, das mindestens eine Hälfte eines Abgabevolumens eines Volumendurchflusses beträgt, mit dem homogenisiertes Material angepasst ist, um pro Minute aus der Homogenisierungsvorrichtung (25, 725) abgegeben zu werden.

4. System (20) zum kontinuierlichen Herstellen einer Fugenmasse nach Anspruch 1 oder 2, wobei das rotierende Mischelement (43) der Homogenisierungsvorrichtung (25) eine rotierbare Welle einschließt, die angepasst ist, um mit einer Spitzengeschwindigkeit an ihrem Umfang von nicht mehr als 2500 Fuß/Minute (~762 Meter/Minute) betrieben zu werden.

5. System (20) zum kontinuierlichen Herstellen einer Fugenmasse nach Anspruch 1 oder 2, wobei die Homogenisierungsvorrichtung (25, 725) konfiguriert ist, um eine ausreichende Menge an Fugenmasse zu vermischen, um eine Variation von Werten einer Fugenmassenmaterialeigenschaft über mehrere aufeinanderfolgend hergestellte volumetrische Einheiten gemischter Fugenmasse relativ zu den Werten der Fugenmassenmaterialeigenschaft der jeweiligen mehreren volumetrischen Einheiten vor einem Durchlaufen der Homogenisierungsvorrichtung (25, 725) zu reduzieren.

6. System (20) zum kontinuierlichen Herstellen einer Fugenmasse nach Anspruch 5, wobei die Homogenisierungskammer (41, 741) der Homogenisierungsvorrichtung (25, 725) eine Kapazität aufweist, die konfiguriert ist, um mindestens drei Volumeneinheiten gemischter Fugenmasse darin unterzubringen.

7. System (20) zum kontinuierlichen Herstellen einer Fugenmasse nach Anspruch 1 oder 2, wobei der kontinuierliche Mischer (323) ein Gehäuse (380) und ein Ausgabeanschlussstück (410) einschließt, wobei das Gehäuse (380) eine Mischkammer (381) und einen Ausgabeauslass (334) definiert, der konfiguriert ist, um gemischte Fugenmasse aus der Mischkammer (381) abzugeben, wobei das Ausgabeanschlussstück (410) einen Endabschnitt (414) mit einer Auslassöffnung (415) und eine perforierte Platte (411) aufweist, die innerhalb der Auslassöffnung (415) angeordnet ist.

8. System (20) zum kontinuierlichen Herstellen einer Fugenmasse nach Anspruch 1 oder 2, wobei ein Einlass (231) für trockene Bestandteile des kontinuierlichen Mischers (23, 123, 323, 523) eine Rutsche (235) umfasst, wobei die Rutsche (235) einen Rutschendurchgang (238) und eine Öffnung (239) in Verbindung mit dem Rutschendurchgang (238) definiert, wobei die Öffnung (239) der Rutsche (235) in Verbindung mit dem Versorgungssystem (21) für trockene Bestandteile steht, um mindestens einen trockenen Bestandteil in dem Rutschendurchgang (238) durch die Öffnung (239) aufzunehmen, und wobei das Versorgungssystem (22) für nasse Bestandteile einen Sprüher (290) mit einer Düse (291) einschließt, wobei die Düse (291) innerhalb des Rutschendurchgangs (238) angeordnet ist, wobei der Sprüher (290) in Fluidverbindung mit einer Wasserzufuhr steht und angepasst ist, um selektiv Wasser in die Rutsche (235) zu sprühen.

9. Verfahren zum kontinuierlichen Herstellen einer Fugenmasse,
**dadurch gekennzeichnet, dass** es ein System nach einem der Ansprüche 1 bis 8 verwendet und umfasst:
Zuführen von Fugenmassebestandteilen, die mindestens einen trockenen Bestandteil und mindestens einen flüssigen Bestandteil umfassen, zu der Vorrichtung (23, 123, 323, 523) zum kontinuierlichen Mischen;
kontinuierliches Mischen der Fugenmassebestandteile unter Verwendung der Vorrichtung (23, 123, 323, 523) zum kontinuierlichen Mischen, um eine gemischte Fugenmassenzusammensetzung auszubilden;
Homogenisieren mehrerer volumetrischer Einheiten der gemischten Fugenmasse in der Homogenisierungsvorrichtung (25, 725), um die Variation in mindestens einer Materialeigenschaft der gemischten Fugenmasse relativ zu jeder der mindestens einen Materialeigenschaft der jeweiligen mehreren volumetrischen Einheiten vor der Homogenisierung zu reduzieren.

## Revendications

1. Système (20) de fabrication en continu d'un composé à joints, le système (20) comprenant : un dispositif de commande ;
un mélangeur continu (23, 123, 323, 523), le mélangeur continu (23, 123, 323, 523) ayant au moins une entrée de mélangeur (31, 32) et une sortie de mélangeur (34), le mélangeur continu (23, 123, 323, 523) étant adapté pour recevoir des ingrédients de composé à joints comportant au moins un ingrédient sec et au moins un ingrédient liquide par l'intermédiaire de ladite au moins une entrée de mélangeur (31, 32 ; 131, 132, 133 ; 231), pour mélanger en continu les ingrédients du composé à joints pour former une composition de composé à joints mélangé, et pour décharger la composition de composé à joints mélangé depuis la sortie de mélangeur (34), dans lequel l'au moins une entrée de mélangeur (31, 32) du mélangeur continu (23, 123, 323, 523) comprend au moins une entrée d'ingrédient sec (31) et au moins une entrée d'ingrédient humide (32) ;
un dispositif d'homogénéisation (25, 725), le dispositif d'homogénéisation (25, 75) étant disposé en aval du mélangeur continu (23, 123, 323, 523), le dispositif d'homogénéisation (25, 725) comporte un boîtier (40, 740) définissant une chambre d'homogénéisation (41, 741), et un élément de mélange rotatif (43, 743) disposé à l'intérieur de la chambre d'homogénéisation (41, 741), le dispositif d'homogénéisation (25, 725) ayant une entrée d'homogénéisateur (45) et une sortie d'homogénéisateur (47) toutes deux en communication fluidique avec la chambre d'homogénéisation (41, 741), le dispositif d'homogénéisation (25, 725) étant adapté pour recevoir dans la chambre d'homogénéisation (41, 741) par l'intermédiaire de l'entrée d'homogénéisateur (45) la composition de composé à joint mélangé provenant de la sortie de mélangeur (34) du mélangeur continu (23, 123, 323, 523) ;
un système d'alimentation en ingrédient sec (21), le système d'alimentation en ingrédient sec (21) étant disposé en amont du mélangeur continu, le système d'alimentation en ingrédient sec (21) étant conçu pour alimenter sélectivement ledit au moins un ingrédient sec vers ladite au moins une entrée d'ingrédient sec (31) du mélangeur continu (23, 123, 323, 523) ;
un système d'alimentation en ingrédient humide (22), le système d'alimentation en ingrédient humide (22) étant disposé en amont du mélangeur continu et le système d'alimentation en ingrédient humide (22) est conçu pour alimenter sélectivement au moins un ingrédient liquide à au moins une entrée d'ingrédient humide (32) du mélangeur continu (23, 123, 323, 523) ; et
un poste d'emballage (29) conçu pour emballer des unités volumétriques de composé à joints reçues du dispositif d'homogénéisation (25, 725) dans des récipients appropriés respectifs ;
**caractérisé en ce que** le dispositif de commande est adapté pour ajuster une vitesse de fonctionnement du dispositif d'homogénéisation afin de mettre en rotation l'élément de mélange rotatif (43, 743) dans des conditions de cisaillement dans la chambre d'homogénéisation (41, 741) à une vitesse n'excédant pas 400 tr/min.

2. Système de fabrication en continu d'un composé à joints selon la revendication 1, dans lequel la chambre d'homogénéisation du dispositif d'homogénéisation a un volume de chambre de mélange qui est au moins un dixième d'un volume de distribution d'un débit volumétrique auquel le matériau homogénéisé est adapté pour être distribué par le dispositif d'homogénéisation par minute.

3. Système (20) de fabrication en continu d'un composé à joints selon la revendication 2, dans lequel le volume de chambre de mélange de la chambre d'homogénéisation (41, 741) du dispositif d'homogénéisation (25, 725) a un volume de chambre de mélange qui est au moins la moitié d'un volume de distribution d'un débit volumétrique auquel le matériau homogénéisé est adapté pour être distribué par le dispositif d'homogénéisation (25, 725) par minute.

4. Système (20) de fabrication en continu d'un composé à joints selon la revendication 1 ou la revendication 2, dans lequel l'élément de mélange rotatif (43) du dispositif d'homogénéisation (25) comporte un arbre rotatif qui est adapté pour être actionné avec une vitesse de pointe à sa circonférence n'excédant pas 2 500 pieds/minute (~762 mètres/minute).

5. Système (20) de fabrication en continu d'un composé à joints selon la revendication 1 ou la revendication 2, dans lequel le dispositif d'homogénéisation (25, 725) est conçu pour mélanger une quantité suffisante de composé à joints de manière à réduire la variation de valeurs d'une propriété de matériau de composé à joints à travers de multiples unités volumétriques produites successivement de composé à joints mélangé par rapport aux valeurs de la propriété de matériau de composé à joints des multiples unités volumétriques respectives avant de passer à travers le dispositif d'homogénéisation (25, 725).

6. Système (20) de fabrication en continu d'un composé à joints selon la revendication 5, dans lequel la chambre d'homogénéisation (41, 741) du dispositif d'homogénéisation (25, 725) a une capacité conçue pour accueillir au moins trois unités volumétriques de composé à joints mélangé dans celle-ci.

7. Système (20) de fabrication en continu d'un composé à joints selon la revendication 1 ou la revendication 2, dans lequel le mélangeur continu (323) comporte un boîtier (380) et un raccord de décharge (410), le boîtier (380) définissant une chambre de mélange (381) et une sortie de décharge (334) conçue pour distribuer un composé à joints mélangé à partir de la chambre de mélange (381), le raccord de décharge (410) ayant une partie terminale (414) avec une ouverture de sortie (415) et une plaque perforée (411) disposée à l'intérieur de l'ouverture de sortie (415).

8. Système (20) de fabrication en continu d'un composé à joints selon la revendication 1 ou la revendication 2, dans lequel une entrée d'ingrédient sec (231) du mélangeur continu (23, 123, 323, 523) comprend une goulotte (235), la goulotte (235) définissant un passage de goulotte (238) et une ouverture (239) en communication avec le passage de goulotte (238), l'ouverture (239) de la goulotte (235) en communication avec le système d'alimentation en ingrédient sec (21) pour recevoir au moins un ingrédient sec dans le passage de goulotte (238) à travers l'ouverture (239), et dans lequel le système d'alimentation en ingrédient humide (22) comporte un pulvérisateur (290) avec une buse (291), la buse (291) étant disposée à l'intérieur du passage de goulotte (238), le pulvérisateur (290) étant en communication fluidique avec une alimentation en eau et adapté pour pulvériser sélectivement de l'eau dans la goulotte (235).

9. Procédé de fabrication en continu d'un composé à joints **caractérisé en ce qu'il** utilise un système selon l'une quelconque des revendications 1 à 8, et qu'il comprend :
l'alimentation d'ingrédients de composé à joints comprenant au moins un ingrédient sec et au moins un ingrédient liquide dans l'appareil de mélange en continu (23, 123, 323, 523) ;
le mélange en continu des ingrédients du composé à joints à l'aide de l'appareil de mélange en continu (23, 123, 323, 523) pour former une composition de composé à joints mélangé ;
l'homogénéisation de multiples unités volumétriques du composé à joints mélangé dans le dispositif d'homogénéisation (25, 725) afin de réduire la variation d'au moins une propriété de matériau du composé à joints mélangé par rapport à chacune de ladite au moins une propriété de matériau des multiples unités volumétriques respectives avant de subir l'homogénéisation.
